# EUROPEAN PATENT APPLICATION

(11) **EP 4 300 284 A1**
(43) Date of publication of application: **03.01.2024**
(21) Application number: 22778841.1
(22) Date of filing: 28.03.2022
(51) Int. Cl.: G06F 3/14

(54) **SCREENCAST METHOD AND RELATED APPARATUS**

(30) Priority: 31.03.2021 CN 202110352845
(71) Applicant: Huawei Technologies Co., Ltd., Shenzhen, Guangdong 518129 (CN)
(72) Inventor: LIU, Shicong, Shenzhen, Guangdong 518129 (CN); GU, Hejin, Shenzhen, Guangdong 518129 (CN); LI, Guofeng, Shenzhen, Guangdong 518129 (CN)
(74) Representative: Thun, Clemens
(86) International application number: PCT/CN2022/083309
(87) International publication number: WO 2022/206659

(57) **Abstract**

A screen casting method and a related apparatus are disclosed. The method includes: A first electronic device displays a floating window on display content of a home screen in a superimposed manner. A first user interface is displayed in the floating window, the display content of the home screen is determined based on image data in a home screen display region, and display content of the floating window is determined based on image data in a first extended display region. A first operation on the floating window is detected, and the first electronic device casts, in response to the first operation, the display content of the floating window to a second electronic device based on the image data in the first extended display region. A first instruction sent by the second electronic device for the first user interface displayed by screen casting is received. The first electronic device switches, in response to the first instruction, the display content of the floating window to a second user interface based on an application window run in the first extended display region. In this way, reverse control after screen casting can be effectively implemented.

## Description

This application claims priority to Chinese Patent Application No. 202110352845.7, filed with the China National Intellectual Property Administration on March 31, 2021 and entitled "SCREEN CASTING METHOD AND RELATED APPARATUS", which is incorporated herein by reference in its entirety.

### TECHNICAL FIELD

This application relates to the field of electronic technologies, and in particular, to a screen casting method and a related apparatus.

### BACKGROUND

Currently, in the screen casting technology, content of screen mirroring is usually filtered through layer filtering. For example, in response to an operation performed by a user, an application 1 may be casted to a tablet computer. Specifically, a mobile phone synthesizes all layers for display, simultaneously selects layers corresponding to the application 1 for filtering and synthesis, and sends synthesized image data of the application 1 to the tablet computer. The tablet computer may perform screen casting display based on the foregoing image data.

However, in the foregoing conventional screen mirroring solution by content filtering and image synthesis, it is difficult to accurately implement reverse control after screen casting. For example, for an input operation of reverse control on the tablet computer, the mobile phone needs to respond to the foregoing input operation based on an interface layout of an application run in the foreground of the mobile phone. However, because an application on which the input operation performed by the user attempts to act may be inconsistent with the application currently run in the foreground of the mobile phone, reverse control after screen casting cannot be accurately implemented.

### SUMMARY

Embodiments of this application provide a screen casting method and a related apparatus, to effectively implement reverse control after screen casting.

According to a first aspect, this application provides a screen casting method. The method includes: A first electronic device displays a floating window on display content of a home screen in a superimposed manner. A first user interface is displayed in the floating window, the display content of the home screen is determined based on image data in a home screen display region, and display content of the floating window is determined based on image data in a first extended display region. A first operation on the floating window is detected, and the first electronic device casts, in response to the first operation, the display content of the floating window to a second electronic device based on the image data in the first extended display region. A first instruction sent by the second electronic device for the first user interface displayed by screen casting is received. The first electronic device switches, in response to the first instruction, the display content of the floating window to a second user interface based on an application window run in the first extended display region.

During implementation of embodiments of this application, the first electronic device may display the floating window on the display content of the home screen in a superimposed manner. The home screen performs display based on the image data in the home screen display region, and the floating window performs display based on the image data in the extended display region. In addition, the display content of the floating window may be casted to a screen casting destination end based on the extended display region, screen casting content may further be observed in real time through the floating window, and reverse control performed on the screen casting destination end on the screen casting content (that is, the display content of the floating window) may further be effectively implemented. In addition, in embodiments of this application, screen casting display is performed based on the image data corresponding to the extended display region, which effectively avoids missed screen casting and multi-screen casting in a conventional screen casting solution in which layers are filtered.

In an implementation, the first instruction includes first coordinates of a second operation acting on the first user interface in a screen casting window displayed on the second electronic device. That the first electronic device switches the display content of the floating window to a second user interface based on an application window run in the first extended display region specifically includes: The first electronic device determines, based on the first coordinates and an interface layout of an application window recently run in the first extended display region, that the second operation is for switching display content of screen casting to the second user interface. The electronic device switches the display content of the floating window to the second user interface, and sends image data in the second user interface to the second electronic device.

In an implementation, the first coordinates are first original touch coordinates of the second operation on a display screen of the second electronic device. That the first electronic device determines, based on the first coordinates and an interface layout of an application window recently run in the first extended display region, that the second operation is for switching display content of screen casting to the second user interface specifically includes: obtaining first relative coordinates of the first original touch coordinates based on a position of the screen casting window on the display screen of the second electronic device, where the first relative coordinates are relative coordinates that are of the first original touch coordinates and that are in the screen casting window; determining, based on the first relative coordinates and a window ratio of the screen casting window to a full-screen display window of the first electronic device, second relative coordinates corresponding to the first relative coordinates, where the second relative coordinates are relative coordinates that are of the first relative coordinates in the screen casting window and that are in the full-screen display window of the first electronic device; and determining, based on the second relative coordinates and the interface layout of the application window recently run in the first extended display region, that the second operation is for switching the display content of the floating window to the second user interface.

In an implementation, the first coordinates are first relative coordinates of first original touch coordinates of the second operation on a display screen of the second electronic device, and the first relative coordinates are relative coordinates that are of the first original touch coordinates and that are in the screen casting window. That the first electronic device determines, based on the first coordinates and an interface layout of an application window recently run in the first extended display region, that the second operation is for switching display content of screen casting to the second user interface specifically includes: determining, based on the first relative coordinates and a window ratio of the screen casting window to a full-screen display window of the first electronic device, second relative coordinates corresponding to the first relative coordinates, where the second relative coordinates are relative coordinates that are of the first relative coordinates in the screen casting window and that are in the full-screen display window of the first electronic device; and determining, based on the second relative coordinates and the interface layout of the application window recently run in the first extended display region, that the second operation is for switching the display content of the floating window to the second user interface.

In an implementation, the first coordinates are second relative coordinates corresponding to first original touch coordinates of the second operation on a display screen of the second electronic device, and the second relative coordinates are determined based on first relative coordinates of the first original touch coordinates and a window ratio of the screen casting window to a full-screen display window of the first electronic device. The first relative coordinates are relative coordinates that are of the first original touch coordinates and that are in the screen casting window, and the second relative coordinates are relative coordinates that are of the first relative coordinates in the screen casting window and that are in the full-screen display window of the first electronic device.

In an implementation, before that a first electronic device displays a floating window on display content of a home screen in a superimposed manner, the method further includes: The first electronic device displays a first user interface of a first application window of a first application. A third operation on a target floating object is detected. The target floating object is the first application or the first application window. The first electronic device creates, in response to the third operation, the first extended display region, and migrates, to the first extended display region, the target floating object run in the home screen. That a first electronic device displays a floating window on display content of a home screen in a superimposed manner, the method specifically includes: The first electronic device determines the display content of the floating window based on image data of the target floating object run in the first extended display region, determines the display content of the home screen based on the image data in the home screen display region, and displays the floating window on the display content of the home screen in a superimposed manner.

In an implementation, the target floating obj ect is the first application, the first extended display region is for running the first application, and the floating window is configured to display a user interface of the first application based on the image data in the first extended display region. Alternatively, the target floating object is the first application window, the first extended display region is for running the first application window, and the floating window is configured to display a user interface of the first application window based on the image data in the first extended display region.

In an implementation, after the first electronic device casts, in response to the first operation, the display content of the floating window to a second electronic device based on the image data in the first extended display region, the method further includes: A fourth operation acting on the first user interface displayed in the floating window is detected. The first electronic device switches, in response to the fourth operation, the display content of the floating window to a third user interface based on the first extended display region.

In an implementation, that the first electronic device switches, in response to the fourth operation, the display content of the floating window to a third user interface based on the first extended display region specifically includes: obtaining third relative coordinates of second original touch coordinates of the fourth operation, where the third relative coordinates are relative coordinates of the second original touch coordinates in the floating window; determining, based on the third relative coordinates and a window ratio of the floating window to a full-screen display window of the first electronic device, fourth relative coordinates corresponding to the third relative coordinates, where the fourth relative coordinates are relative coordinates of the third relative coordinates in the full-screen display window of the first electronic device; and determining, based on the fourth relative coordinates and an interface layout of an application window recently run in the first extended display region, that the fourth operation is for switching the display content of the floating window to the third user interface.

In an implementation, the display content of the home screen is a fourth user interface, and after a first electronic device displays a floating window on display content of a home screen in a superimposed manner, the method further includes: A fifth operation on the home screen is detected. The first electronic device casts, in response to the fifth operation, the display content of the home screen to the second electronic device based on the image data in the home screen display region. A second instruction sent by the second electronic device for the fourth user interface displayed by screen casting is received. The first electronic device switches, in response to the second instruction, the display content of the home screen to a fifth user interface based on the application window recently run in the home screen display region.

In embodiments of this application, because the home screen and the floating window correspond to two independent display regions, a user can control the display content of the floating window without affecting the display content of the home screen. Conversely, the user may alternatively control the display content of the home screen without affecting the display content of the floating window.

According to a second aspect, an electronic device is provided, including: a communication interface, a memory, and a processor. The communication interface, the memory, and the processor are coupled. The memory is configured to store computer program code. The computer program code includes computer instructions. When the processor reads the computer instructions from the memory, the electronic device is enabled to perform any possible implementation of the first aspect.

According to a third aspect, a computer-readable storage medium is provided, including instructions. When the instructions are run on an electronic device, the electronic device is enabled to perform any possible implementation of the first aspect.

According to a fourth aspect, a computer product is provided. When the computer program product is run on a computer, the computer is enabled to perform any possible implementation of the first aspect.

### BRIEF DESCRIPTION OF DRAWINGS

FIG. 1A is a schematic diagram of a structure of a communication system according to an embodiment of this application;
FIG. 1B is a schematic diagram of screen casting communication according to an embodiment of this application;
FIG. 2 is a schematic diagram of a structure of an electronic device according to an embodiment of this application;
FIG. 3A to FIG. 3I are schematic diagrams of interfaces of application screen casting according to an embodiment of this application;
FIG. 4A to FIG. 4C are schematic diagrams of interfaces of forward control of application screen casting according to an embodiment of this application;
FIG. 4D to FIG. 4F are schematic diagrams of interfaces of reverse control of application screen casting according to an embodiment of this application;
FIG. 5A to FIG. 5B are schematic diagrams of interfaces of home screen control according to an embodiment of this application;
FIG. 6A and FIG. 6B are schematic diagrams of interfaces of application screen casting according to an embodiment of this application;
FIG. 7A to FIG. 7E are schematic diagrams of interfaces of interface screen casting according to an embodiment of this application;
FIG. 7F to FIG. 7H are schematic diagrams of interfaces of reverse control of interface screen casting according to an embodiment of this application;
FIG. 7I to FIG. 7K are schematic diagrams of interfaces of forward control of interface screen casting according to an embodiment of this application;
FIG. 8A to FIG. 8D are schematic diagrams of interfaces of home screen control according to an embodiment of this application;
FIG. 9A and FIG. 9B are schematic diagrams of interfaces of interface screen casting according to an embodiment of this application;
FIG. 10 is a schematic diagram of a software architecture of an electronic device according to an embodiment of this application;
FIG. 11A is a schematic flowchart of triggering a floating window according to an embodiment of this application;
FIG. 11B is a schematic flowchart of triggering screen casting according to an embodiment of this application;
FIG. 11C is a schematic flowchart of controlling screen casting of a floating window according to an embodiment of this application;
FIG. 11D is a schematic flowchart of another method for controlling screen casting of a floating window according to an embodiment of this application;
FIG. 11E is a schematic flowchart of another method for controlling screen casting of a floating window according to an embodiment of this application; and
FIG. 12 is a schematic flowchart of a screen casting method according to an embodiment of this application.

### DESCRIPTION OF EMBODIMENTS

The technical solutions according to embodiments of this application are clearly and completely described below with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely used for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

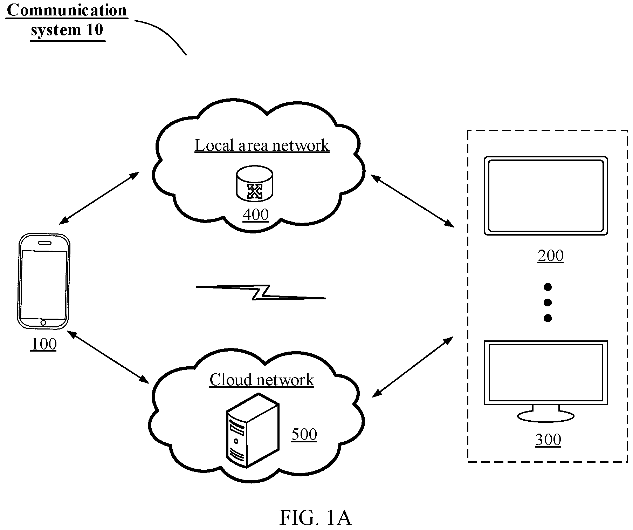

The following describes a communication system 10 provided in embodiments of this application. FIG. 1A illustratively shows a schematic diagram of a structure of a communication system 10 according to an embodiment of this application. As shown in FIG. 1A, the communication system 10 includes an electronic device 100 and a plurality of electronic devices, such as an electronic device 200 and an electronic device 300, connected to the electronic device 100. Descriptions are provided below using the electronic device 200 as an example.

In embodiments of this application, the electronic device 100 may be directly connected to the electronic device 200 through a near-field communication connection or a local wired connection. For example, the electronic device 100 and the electronic device 200 may each include one or more short-range communication modules in a wireless fidelity (wireless fidelity, Wi-Fi) communication module, an ultra-wide band (ultra-wide band, UWB) communication module, a Bluetooth (Bluetooth) communication module, a near-field communication (near-field communication, NFC) communication module, and a ZigBee communication module. The electronic device 100 is used as an example. The electronic device 100 may transmit a signal via the near-field communication module (for example, a Bluetooth communication module), to detect and scan an electronic device near the electronic device 100, so that the electronic device 100 can discover a nearby electronic device based on the near-field communication protocol, establish a wireless communication connection to the nearby electronic device, and transmit data to the nearby electronic device.

In some embodiments, the electronic device 100 and the electronic device 200 may be connected to a local area network (local area network, LAN) by an electronic device 400 in a wired connection manner or a wireless fidelity (wireless fidelity, Wi-Fi) connection manner. For example, the electronic device 400 may be a third-party device like a router, a gateway, or an intelligent device controller. In some embodiments, the electronic device 100 and the electronic device 200 may alternatively be indirectly connected by at least one electronic device 500 in a wide area network. For example, the electronic device 500 may be a hardware server, or may be a cloud server implanted in a virtualized environment. It may be understood that, the electronic device 100 may indirectly establish a wireless communication connection and exchange data with the electronic device 200 via the electronic device 400 and/or the electronic device 500.

It may be understood that the structure shown in this embodiment does not constitute a specific limitation on the communication system 10. In some other embodiments of this application, the communication system 10 may include more or fewer devices than those shown in the figure.

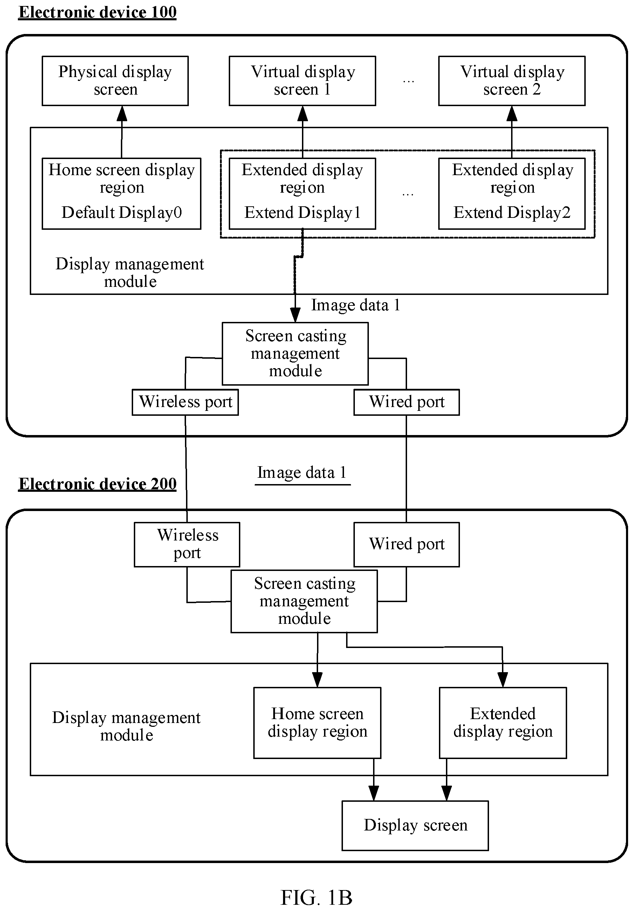

In embodiments of this application, after the connection is established between the electronic device 100 and the electronic device 200, the electronic device 100 may send, to the electronic device 200, image data and/or audio data for screen casting, and the electronic device 200 may perform interface display and/or audio output based on the data sent by the electronic device 100. For example, FIG. 1B is a schematic diagram of screen casting communication between an electronic device 100 and an electronic device 200.

For example, the electronic device 100 and the electronic device 200 each include a display management module and a screen casting management module. The display management module is configured to manage a life cycle of interface display of the electronic device, determine how to control, based on a currently connected physical display screen and/or virtual display screen, logical display of the currently connected physical display screen and/or virtual display screen, send a notification to a system and an application when a display state changes, and so on. As shown in FIG. 1B, the display management module includes a home screen display region. A physical display screen (which may also be referred to as a home screen) of the electronic device may display an interface based on image data of an application run in the home screen display region (for example, Default Display0). In some embodiments, the electronic device may further create at least one extended display region by using the display management module. Each extended display region corresponds to one virtual display screen. In addition, a specified application or a specified application window run in the home screen display region may be migrated to an extended display region (for example, Extend Display1).

The screen casting management module is configured to obtain image data for screen casting from the display management module. For example, as shown in FIG. 1B, after the screen casting management module obtains image data 1 from Extend Display1, and determines that a screen casting destination end is the electronic device 200, the screen casting management module sends the image data 1 to the electronic device 200 via a wireless port (or a wired port). In some embodiments, the screen casting management module of the electronic device 200 receives the image data 1 via a wireless port (or a wired port), and sends the image data 1 to a home screen display region (or an extended display region) of a display module of the electronic device 200. The electronic device 200 performs screen casting display based on the image data 1 in the home screen display region (or the extended display region). In an implementation, the electronic device 200 may alternatively have no extended display region. This is not specifically limited in embodiments of this application.

The application window may be an application window in an Android system, or may be an application window in an iOS system, or may be an application window in another operating system. This is not specifically limited herein. One application includes a plurality of application windows, and one application window corresponds to one or more user interfaces. For ease of description, an application window may be referred to as a window for short in embodiments of this application. In embodiments of this application, the window may also be considered as a composite control.

The following describes a hardware structure of an electronic device in embodiments of this application.

It should be noted that, types of the electronic device 100 and the electronic device 200 are not specifically limited in embodiments of this application. In some embodiments, the electronic device 100 and the electronic device 200 in embodiments of this application may each be a device like a mobile phone, a wearable device (for example, a smart band or a smartwatch), a tablet computer, a laptop computer, a handheld computer, a notebook computer, an in-vehicle device, a smart television, an ultra-mobile personal computer (ultra-mobile personal computer, UMPC), a cellular phone, a personal digital assistant (personal digital assistant, PDA), or an augmented reality (augmented reality, AR)/virtual reality (virtual reality, VR) device. In some embodiments, the electronic device 200 may alternatively be a projection device like a projector. Examples of embodiments of the electronic device 100 and the electronic device 200 include, but are not limited to, carrying iOS^{®}, Android^{®}, Microsoft^{®}, or another operating system.

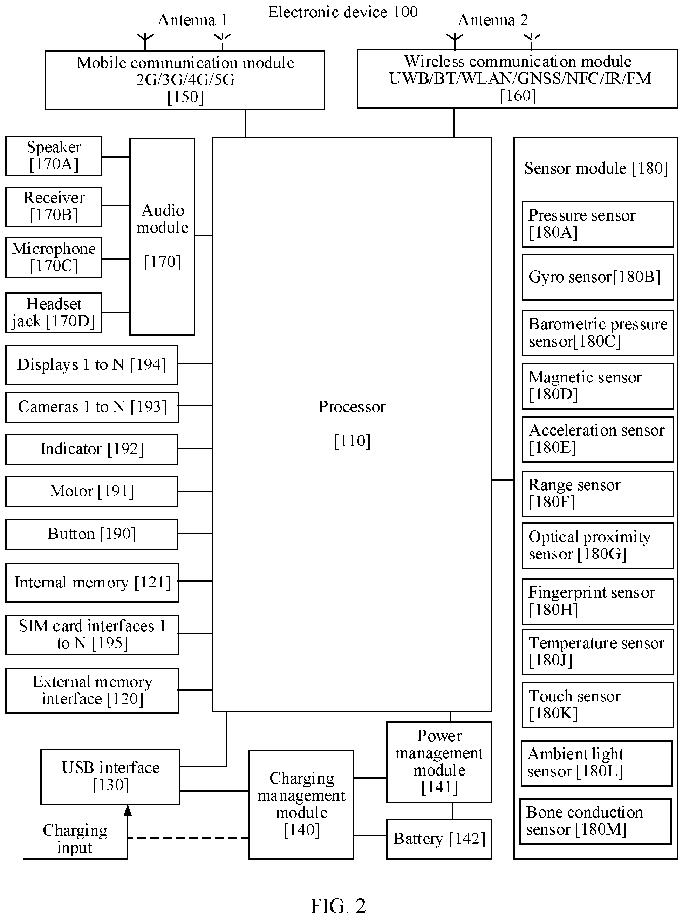

FIG. 2 is a schematic diagram of a structure of an example of an electronic device 100 according to an embodiment of this application. In embodiments of this application, for hardware structures of an electronic device 200 and an electronic device 300, refer to the related embodiment of the hardware structure of the electronic device 100. Details are not described herein again.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in embodiments of the present invention constitutes no specific limitation on the electronic device 100. In some other embodiments of this application, the electronic device 100 may further include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, and a digital signal processor (digital signal processor, DSP), a baseband processor, a neural processing unit (neural processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further arranged in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be arranged in the processor 110. In some other embodiments, the power management module 141 and the charging management module 140 may alternatively be arranged in a same device.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be multiplexed as a diversity antenna in a wireless local area network. In some other embodiments, an antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be arranged in the processor 110. In some embodiments, at least some functional modules of the mobile communication module 150 and at least some modules of the processor 110 may be arranged in a same device.

The modem processor may include a modulator and a demodulator. The modulator is configured to modulate a to-be-sent low-frequency baseband signal into a medium- and highfrequency signal. The demodulator is configured to demodulate a received electromagnetic wave signal into a low-frequency baseband signal. Then, the demodulator transmits the low frequency baseband signal obtained through demodulation to the baseband processor for processing. The low frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is arranged in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near-field communication (near-field communication, NFC), an infrared (infrared, IR) technology, or the like and that is applied to the electronic device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long-term evolution (long-term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, quantum dot light-emitting diodes (quantum dot light-emitting diodes, QLED), or the like. In some embodiments, the electronic device 100 may include one or N displays 194, where N is a positive integer greater than 1.

The electronic device 100 may implement a photographing function via an ISP, a camera 193, a video codec, a GPU, a display 194, an application processor, or the like.

The ISP is configured to process data fed back by the camera 193. For example, during photographing, a shutter is enabled. Light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may further perform algorithm optimization on noise, brightness, and complexion of the image. The ISP may further optimize parameters such as exposure and color temperature of a photographing scenario. In some embodiments, the ISP may be arranged in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like an RGB format or a YUV format. In some embodiments, the electronic device 100 may include one or N cameras 193, where N is a positive integer greater than 1.

The digital signal processor is configured to process a digital signal, and may further process another digital signal in addition to a digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. In this way, the electronic device 100 may play back or record videos in a plurality of coding formats, for example, exercising picture experts group (moving picture experts group, MPEG)-1, MPEG-2, MPEG-3, and MPEG-4.

The NPU is a neural-network (neural-network, NN) computation processor. The NPU quickly processes input information by referring to a structure of a biological neural network, for example, by referring to a mode of transmission between human brain neurons, and continuously performs self-learning. The NPU may be used to implement an application like intelligent cognition of the electronic device 100, for example, image recognition, facial recognition, voice recognition, and text understanding.

The internal memory 121 may include one or more random access memories (random access memories, RAMs) and one or more non-volatile memories (non-volatile memories, NVMs). The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory. (double data rate synchronous dynamic random access memory, DDR SDRAM, for example, a 5th generation DDR SDRAM is usually referred to as a DDR5 SDRAM), and the like. The non-volatile memory may include a magnetic disk storage device and a flash memory (flash memory). The flash memory may be divided according to an operation principle, and may include a NOR flash memory, a NAND flash memory, a 3D NAND flash memory, and the like. The flash memory may be divided based on a potential level of a cell, and may include a single-level cell (single-level cell, SLC), a multi-level cell (multi-level cell, MLC), a triple-level cell (triple-level cell, TLC), a quad-level cell (quad-level cell, QLC), and the like. The flash memory may be divided based on a storage specification, and may include a universal flash memory (English: universal flash storage, UFS), an embedded multimedia card (embedded MultiMedia Card, eMMC), and the like. In some embodiments, the random access memory may be directly read and written by the processor 110. The random access memory may be configured to store an operating system or an executable program (for example, machine instructions) of another running program, and may be further configured to store data of a user and an application, and the like. The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 via the external memory interface 120, to implement a data storage function. For example, files such as music and videos are stored in the external non-volatile memory.

The electronic device 100 may use the audio module 170, the speaker 170A, the telephone receiver 170B, the microphone 170C, the headset jack 170D, the application processor, and the like, to implement an audio function, for example, implement a music playback function and a recording function.

The audio module 170 is configured to convert digital audio information into an analog audio signal output, and is further configured to convert an analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The pressure sensor 180A is configured to sense a pressure signal, and can convert the pressure signal into an electrical signal. In some embodiments, the pressure sensor 180A may be arranged on the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold acts on the SMS message application icon, an instruction for creating a new SMS message is performed.

The gyro sensor 180B may be configured to determine a motion posture of the electronic device 100. In some embodiments, an angular velocity of the electronic device 100 around three axes (that is, axes x, y, and z) may be determined through the gyro sensor 180B.

The barometric pressure sensor 180C is configured to measure barometric pressure. The magnetic sensor 180D may include a Hall effect sensor.

The acceleration sensor 180E may detect accelerations in various directions (for example, directions pointed by the three axes in the x, y, and z three-axis coordinate system of the electronic device 100) of the electronic device 100.

The range sensor 180F is configured to measure a distance. The electronic device 100 may measure the distance in an infrared manner or a laser manner.

The optical proximity sensor 180G may include, for example, a light-emitting diode (LED) and an optical detector like a photodiode.

The ambient light sensor 180L is configured to sense ambient light brightness. The electronic device 100 may adaptively adjust brightness of the display 194 based on the sensed ambient light brightness.

The fingerprint sensor 180H is configured to acquire a fingerprint.

The temperature sensor 180J is configured to detect a temperature.

The touch sensor 180K is also referred to as a "touch device". The touch sensor 180K may be disposed on the display 194, and the touch sensor 180K and the display 194 constitute a touchscreen, which is also referred to as a "touchscreen". The touch sensor 180K is configured to detect a touch operation acting on or near the touch sensor 180K. The touch sensor may transfer the detected touch operation to the application processor to determine a type of the touch event. Visual output related to the touch operation may be provided through the display 194. In some other embodiments, the touch sensor 180K may alternatively be arranged on a surface of the electronic device 100, and is at a position different from that of the display 194.

In some embodiments, the touchscreen of the electronic device 100 may receive an input operation for triggering the application or the user interface to be displayed in the floating window. In some embodiments, the touchscreen of the electronic device 100 may further receive a screen casting operation for an application, a user interface, and/or a floating window.

The bone conduction sensor 180M may obtain a vibration signal. In some embodiments, the bone conduction sensor 180M may obtain a vibration signal of the vibrating bone mass of the human vocal part and a blood pressure pulse signal.

The button 190 may be a mechanical button, or may be a touch button. The electronic device 100 may receive a key input, and generate a key signal input related to a user setting and function control of the electronic device 100.

The following describes an example of a main interface 11 provided in embodiments of this application.

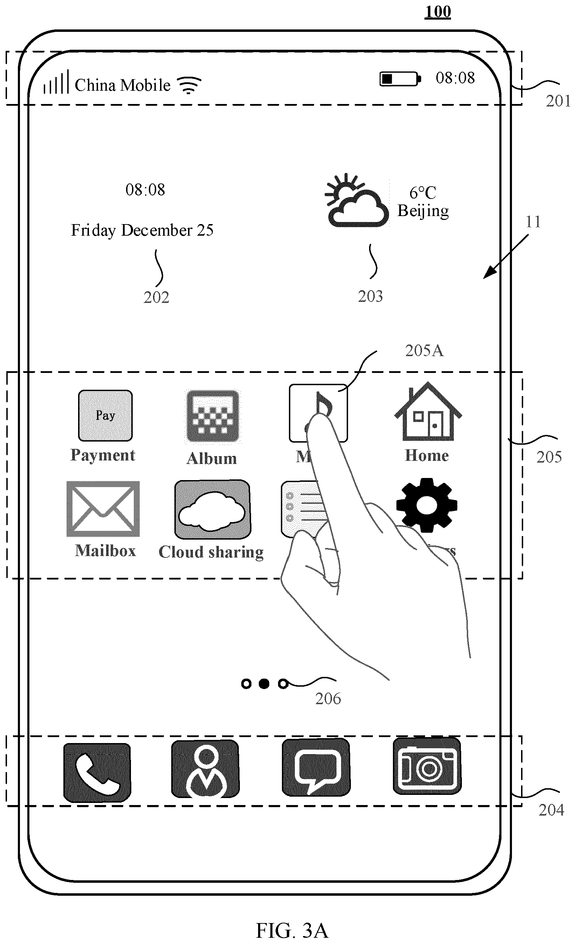

For example, FIG. 3A shows a main interface 11 that is on the electronic device 100 and that is configured to present an application installed on the electronic device 100. The main interface 11 may include: a status bar 201, a calendar indicator 202, a weather indicator 203, a tray 204 with frequently used application icons, and other application icons 205.

The tray 204 with frequently used application icons may present a Phone icon, a Contact icon, an SMS icon, and a Camera icon. The other application icons 205 may present a Payment icon, an Album icon, a Music icon 205A, a Home icon, a Mailbox icon, a Cloud sharing icon, a Memo icon, and a Settings icon. The user interface 10 may also include a page indicator 206. The other application icons may be distributed on a plurality of pages, and the page indicator 206 may indicate a specific page in which an application currently viewed by a user is located. The user may swipe a region of the other application icons leftward or rightward to view application icons on other pages.

It may be understood that FIG. 3A shows merely an example of a user interface on the electronic device 100, and should not constitute a limitation on embodiments of this application.

**The following describes screen casting scenarios in embodiments of this application with reference to the accompanying drawings.**

**Scenario 1:** In this scenario, in response to an input operation performed by a user, the electronic device 100 displays a floating window 1 on display content of a home screen in a superimposed manner, displays an application 1 in the floating window 1, and may cast display content of the application 1 in the floating window 1 to the electronic device 200. The user may view, in real time in the floating window 1, the application 1 that is being casted, perform, on the electronic device 100, forward control on the application 1, and perform, on the electronic device 200, reverse control on the application 1.

**Descriptions are provided below by using an example in which the application 1 is a music application.**

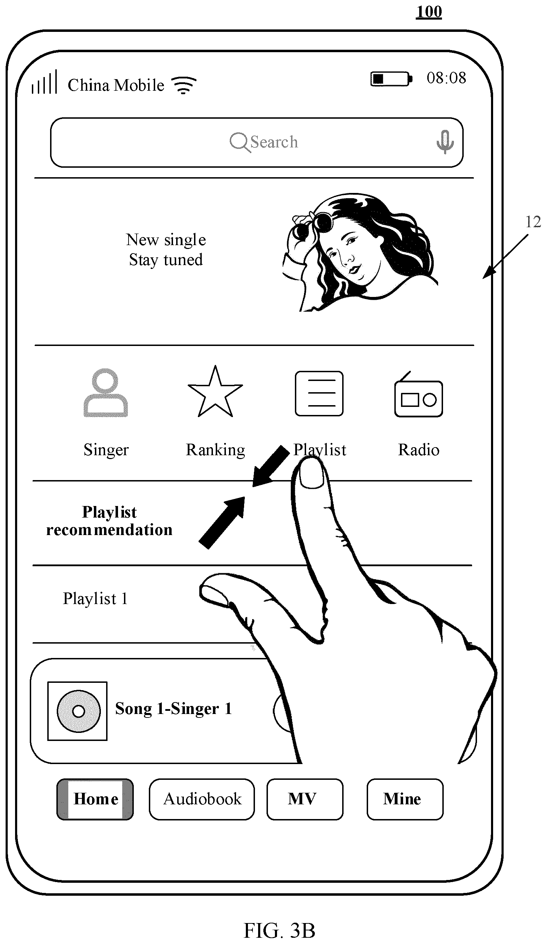

For example, the Music icon 205A shown in FIG. 3A may receive an input operation (for example, a touch operation) performed by the user, and in response to the foregoing input operation, the electronic device 100 may display a user interface 12 of the music application shown in FIG. 3B.

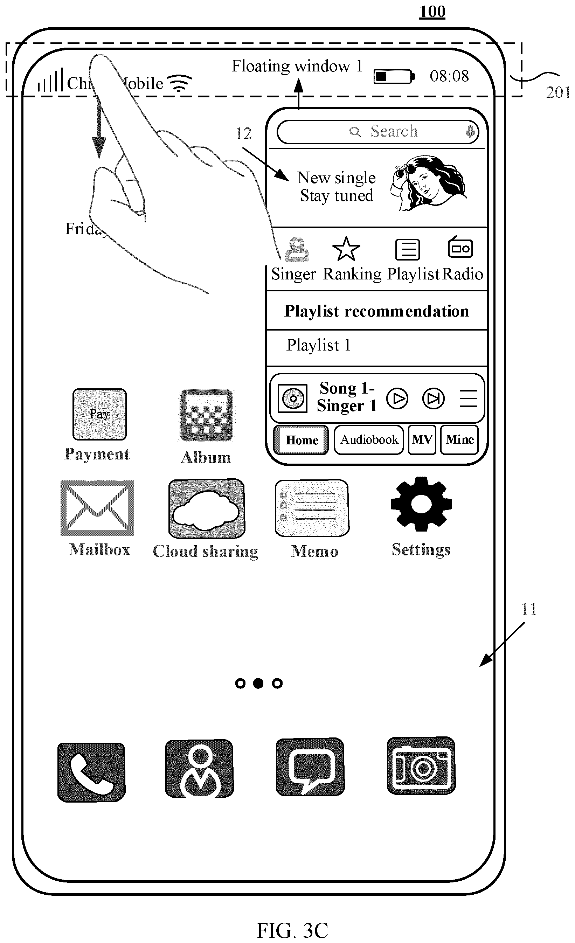

In this embodiment of this application, when the electronic device displays the user interface 12 of the music application, the electronic device 100 detects an application floating operation acting on the music application. As shown in FIG. 3C, in response to the foregoing application floating operation, the electronic device 100 runs the music application 1 in a form of a floating window, and displays a floating window 1 corresponding to the music application 1 on the main interface 11 in a superimposed manner. Display content of the floating window 1 is the zoomed-out user interface 12 of the music application.

In some embodiments, the application floating operation may be that two fingers of the user slide on the display 194 as shown in FIG. 3B, and touch positions of the two fingers gradually approach each other on the display screen in the sliding process. Not limited to the application floating operation shown in FIG. 3B, the electronic device 100 may be triggered through another input operation to display the floating window 1 corresponding to the music application in embodiments of this application. This is not specifically limited herein. In embodiments of this application, the electronic device 100 may further adjust, based on a size of the floating window 1, a size of the user interface displayed in the floating window 1, to adapt the user interface to the size of the floating window 1.

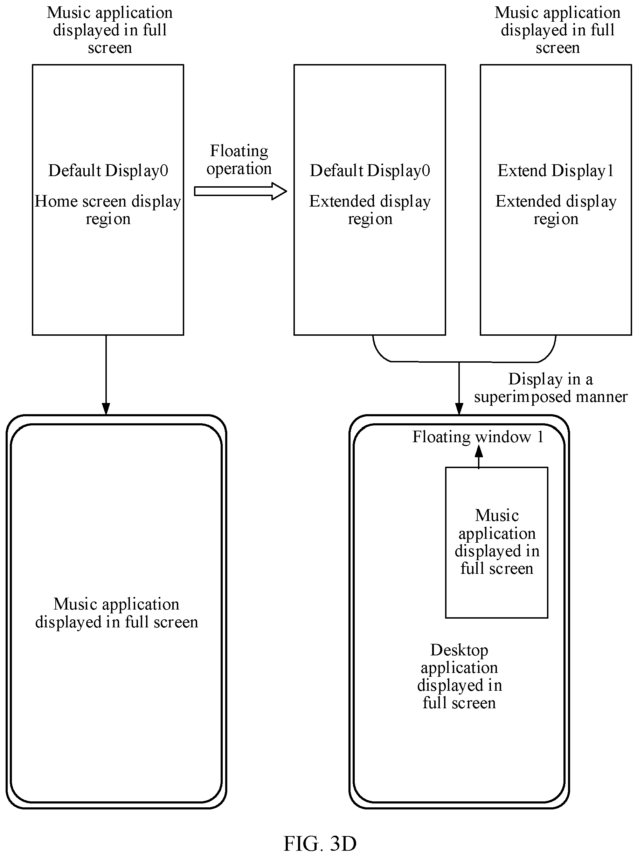

Specifically, in an implementation, as shown in FIG. 3D, the electronic device 100 displays the user interface 12 of the music application in full screen based on image data corresponding to the home screen display region (that is, Default Display0). The electronic device 100 creates, in response to the application floating operation on the music application, an extended display region (for example, Extend Display1) corresponding to the music application, and moves the music application from the home screen display region to the extended display region 1. The electronic device 100 runs the remaining applications (including a desktop application) other than the music application in the home screen display region. The home screen of the electronic device 100 determines display content (for example, a main interface 11 of the desktop application) on the home screen based on application windows of the remaining applications recently run in the home screen display region. The electronic device 100 determines display content (that is, the user interface 12) of the floating window 1 based on the application window of the music application that is recently run in the extended display region 1. The electronic device 100 displays the floating window 1 on the display content of the home screen in a superimposed manner. It should be noted that, the extended display region 1 is for running the music application, that is, the floating window 1 may be configured to display a user interface corresponding to any application window of the music application.

In embodiments of this application, in response to the received input operation, the electronic device 100 may further adjust a display position and/or a size of the floating window 1 on the display 194. The foregoing input operation is not specifically limited in embodiments of this application.

In embodiments of this application, the electronic device 100 may receive a screen casting operation performed by a user, and in response to the screen casting operation, the electronic device 100 may cast display content of the floating window 1 or display content of the home screen to the electronic device 200.

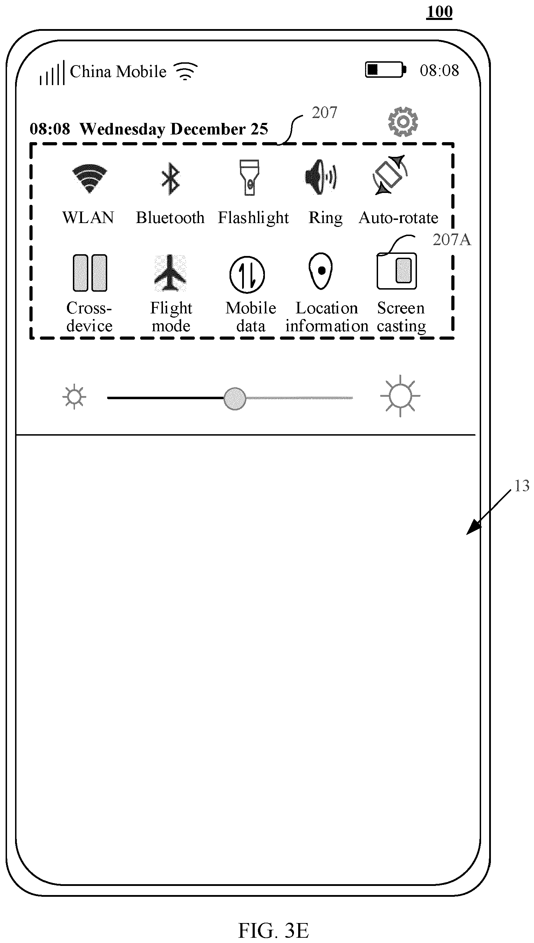

For example, as shown in FIG. 3C, the electronic device 100 receives a sliding down operation performed by the user on the status bar 201. In response to the sliding operation, the electronic device 100 displays a notification bar interface 13 shown in FIG. 3E. The notification bar interface includes a plurality of commonly used shortcut icons 207, for example, a WLAN icon, a Bluetooth icon, and a Screen casting icon 207A shown in FIG. 3E.

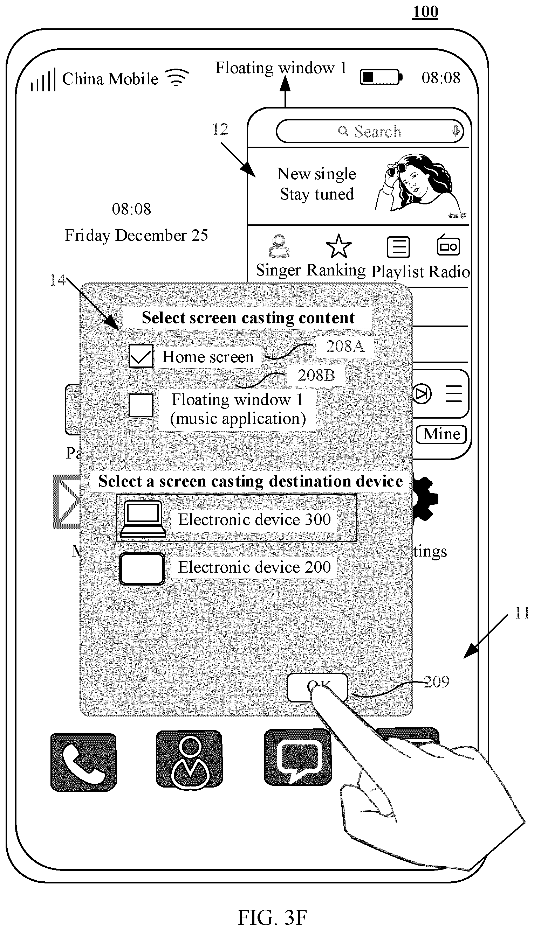

The Screen casting icon 207A may receive an input operation performed by the user. In response to the foregoing input operation, the electronic device 100 displays a screen casting selection interface 14 shown in FIG. 3F. The screen casting selection interface may be for selecting screen casting content and/or a screen casting destination end, and may further display currently casted screen casting content of the electronic device 100 and a screen casting destination end corresponding to the screen casting content.

The screen casting selection interface 14 may include one or more screen casting content options and one or more screen casting destination end options. Refer to FIG. 3F. The one or more screen casting content options may include a content option 208A corresponding to the home screen, and/or a content option corresponding to at least one floating window (for example, a content option 208B corresponding to the floating window 1). The one or more screen casting destination end options may include the electronic device 200 and the electronic device 300.

In embodiments of this application, the electronic device 100 may cast at least one type of screen casting content to at least one screen casting destination end. For example, the electronic device 100 may alternatively cast display content corresponding to the content option 208B to the electronic device 200 and the electronic device 300. Alternatively, the electronic device 100 may cast both display content corresponding to the content option 208A and display content corresponding to the content option 208B to the electronic device 200. Alternatively, the electronic device 100 may cast both display content corresponding to the content option 208A and display content corresponding to the content option 208B to the electronic device 200 and the electronic device 300. This is not specifically limited herein.

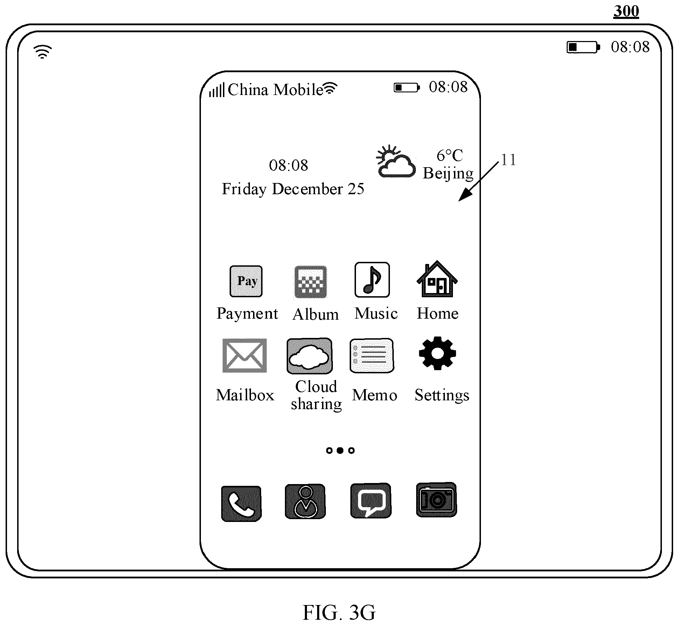

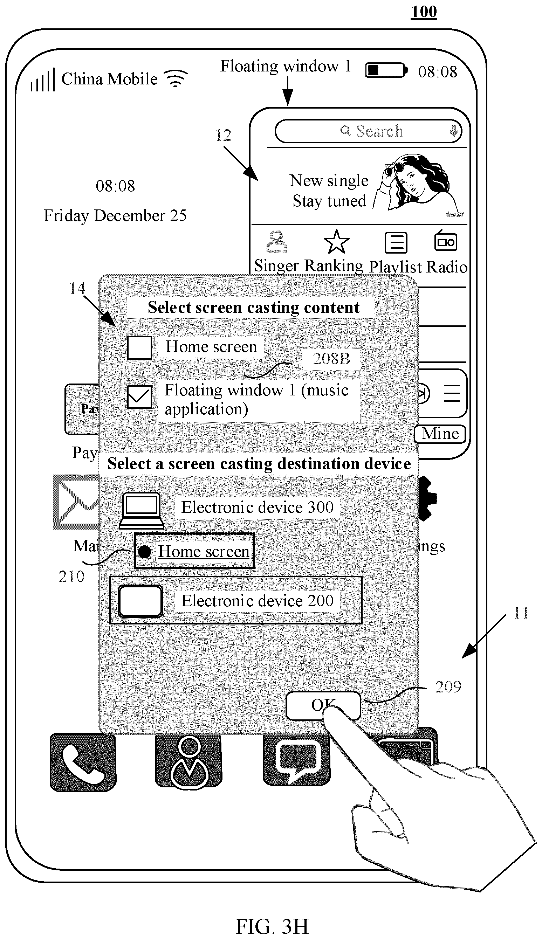

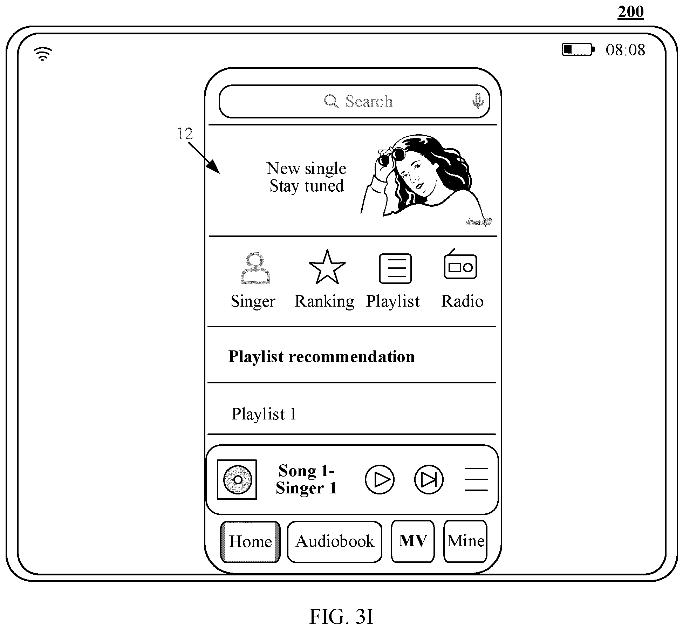

As shown in FIG. 3F, the screen casting selection interface 14 may further include an OK control 209. Refer to FIG. 3F and FIG. 3G. After the user selects the content option 208A corresponding to the home screen and the electronic device 300, the electronic device 100 sends display content (for example, the main interface 11) of the home screen to the electronic device 300 in response to an input operation (for example, a touch operation) on the OK control 209. The electronic device 300 displays the main interface 11 shown in FIG. 3G. Refer to FIG. 3H and FIG. 3I. After the user selects the content option 208B corresponding to the floating window 1 and the electronic device 200, the electronic device 100 sends display content (for example, the user interface 12) of the floating window 1 to the electronic device 200 in response to an input operation on the OK control 209. The electronic device 200 displays the user interface 12 shown in FIG. 3I. In an implementation, as shown in FIG. 3H, after the electronic device casts the display content of the home screen to the electronic device 300, the electronic device 100 may display, on the screen casting selection interface 14, at least one content option (for example, the content option 210 of the home screen) currently casted to the electronic device 300.

Specifically, in an implementation, if the user chooses to cast the display content of the floating window 1 to the electronic device 200, the electronic device 100 casts image data of the music application run in the extended display region 1 corresponding to the floating window 1 to the electronic device 200. If the user chooses to cast the display content of the home screen to the electronic device 200, the electronic device 200 casts image data of the applications run in the home screen display region to the electronic device 200.

Descriptions are provided below by using an example in which the screen casting destination end is the electronic device 200. In an implementation, the electronic device 200 may zoom in or out, based on a size of a display screen of the electronic device 200, the user interface sent by the electronic device 100, or may perform adaptive layout on controls in the user interface sent by the electronic device 100, so that the controls in the display content are adaptively displayed on the display screen of the electronic device 200. This is not specifically limited herein. In an implementation, after the electronic device 100 establishes a connection to the electronic device 200, the electronic device 100 may obtain a size 1 at which the electronic device 200 performs screen casting display, and the electronic device 100 adjusts a to-be-casted user interface to the size 1 and sends the to-be-casted user interface to the electronic device 200.

It should be noted that, not limited to the user operations shown in FIG. 3C and FIG. 3E, the electronic device 100 may alternatively be triggered through another user operation to display the screen casting selection interface 14 in embodiments of this application. For example, the electronic device 100 receives a double-finger sliding down operation performed by the user on the display 194, and in response to the sliding operation, the electronic device displays the screen casting selection interface 14.

It should be noted that, not limited to displaying the screen casting selection interface 14 first, and casting the screen casting content to the screen casting destination end after selecting the screen casting content and/or the screen casting destination end, the electronic device 100 in FIG. 3C may further directly cast specified screen casting content to the screen casting destination end in response to a screen casting operation performed by the user in embodiments of this application. For example, in FIG. 3C, in response to a received screen casting operation 1, the electronic device 100 casts display content of the floating window 1 to the electronic device 200. In response to a received screen casting operation 2, the electronic device 100 casts display content of the home screen to the electronic device 200. For example, the screen casting operation 1 may be drawing a "Z" shape on the display 194 with a knuckle of the user, and the screen casting operation 2 may be drawing an "O" shape on the display 194 with a knuckle of the user.

In embodiments of this application, the user may switch, through the electronic device 100 or the electronic device 200, a content option casted to the electronic device 200.

For example, after the electronic device 100 casts the display content of the floating window 1 to the electronic device 200, the electronic device 100 may switch, in response to a received switching operation, the screen casting content of the electronic device 200 to the display content of the home screen. For example, after the electronic device 100 casts the display content of the floating window 1 to the electronic device 200, the electronic device 200 may send an instruction 1 to the electronic device 100 in response to the received switching operation. The instruction 1 indicates the electronic device 100 to switch the screen casting content option to the display content of the home screen.

In an implementation, the instruction 1 includes touch information (for example, touch coordinates, touch duration, and/or a touch trajectory) of the switching operation. The electronic device 100 determines, based on the touch information of the switching operation, that an event triggered by the switching operation is switching the content option casted to the electronic device 200.

**In embodiments of this application, the user may perform, on the electronic device 100 through the floating window 1, forward control on the music application.**

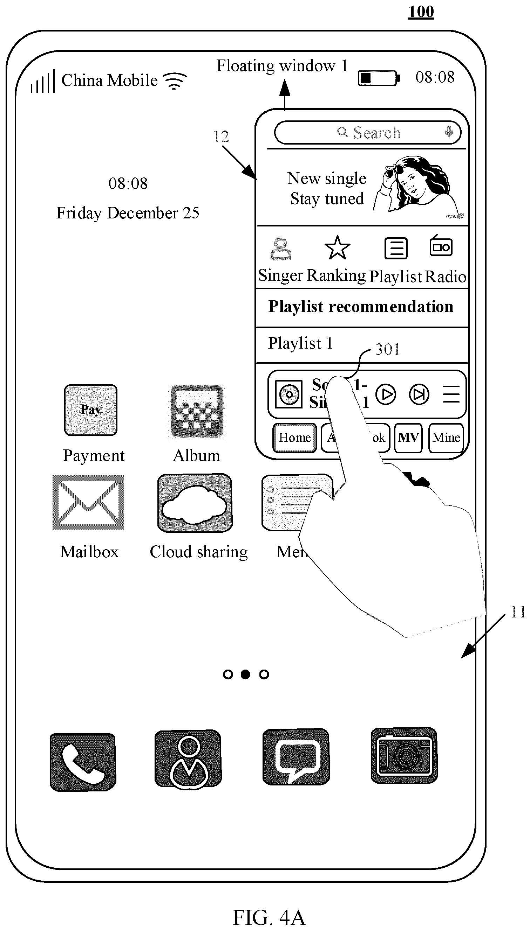

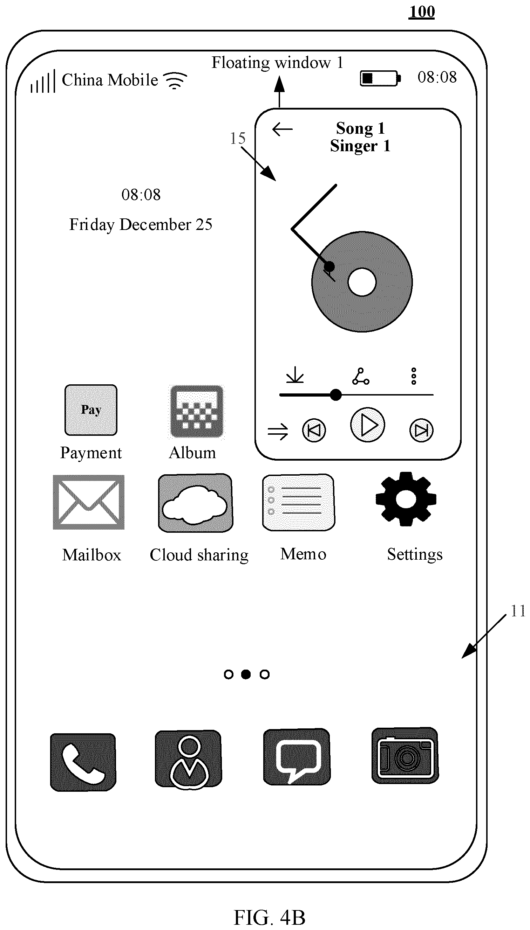

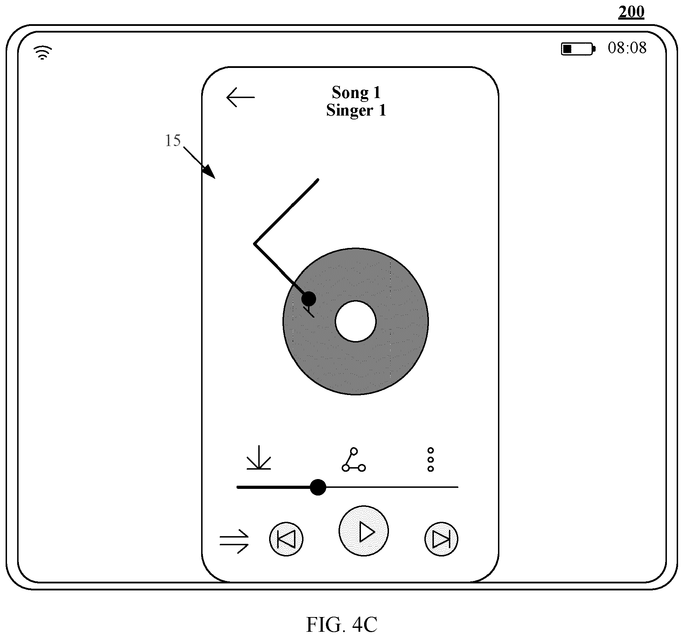

For example, as shown in FIG. 4A, the user interface 12 includes a control 301. The control 301 may receive an input operation (for example, a touch operation) performed by the user. In response to the foregoing input operation, the electronic device 100 displays, in the floating window 1, a song playing interface 15 of the music application shown in FIG. 4B, and sends image data corresponding to the song playing interface 15 to the electronic device 200. The electronic device 200 displays the song playing interface 15 shown in FIG. 4C.

Specifically, in some embodiments, after receiving an input operation acting on a display region of the floating window, the electronic device 100 calculates relative coordinates 1 of the input operation on the music application displayed in full screen. The electronic device 100 determines that an application window of the music application that is recently run in the extended display region 1 corresponds to the user interface 12. The electronic device 100 determines, based on the relative coordinates 1 and an interface layout of the user interface 12, that the input operation is a touch operation acting on the control 301 in the user interface 12. In response to the foregoing touch operation, the electronic device 100 runs the song playing interface 15 of the music application in the extended display region 1, and displays the song playing interface 15 in the floating window based on image data in the song playing interface 15 run in the extended display region 1. The electronic device 100 sends the image data in the song playing interface 15 run in the extended display region 1 to the electronic device 200.

**In embodiments of this application, the user may perform, on the electronic device 200 through the user interface displayed by screen casting, reverse control on the music application.**

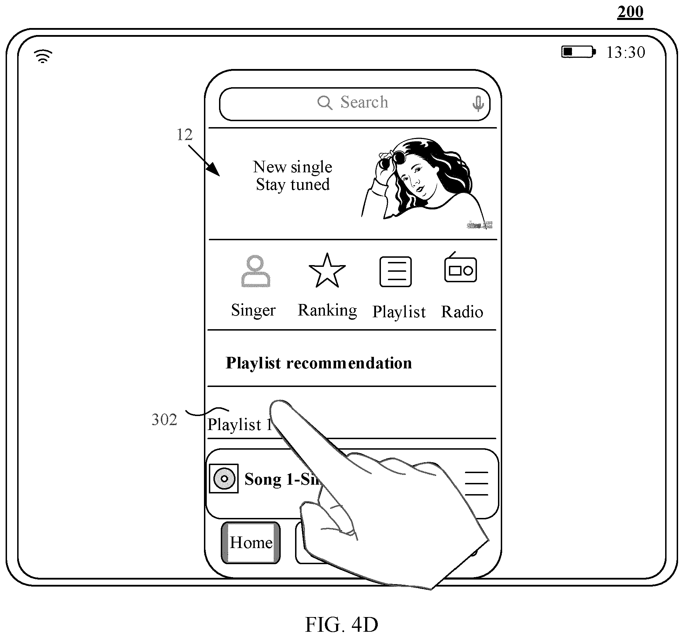

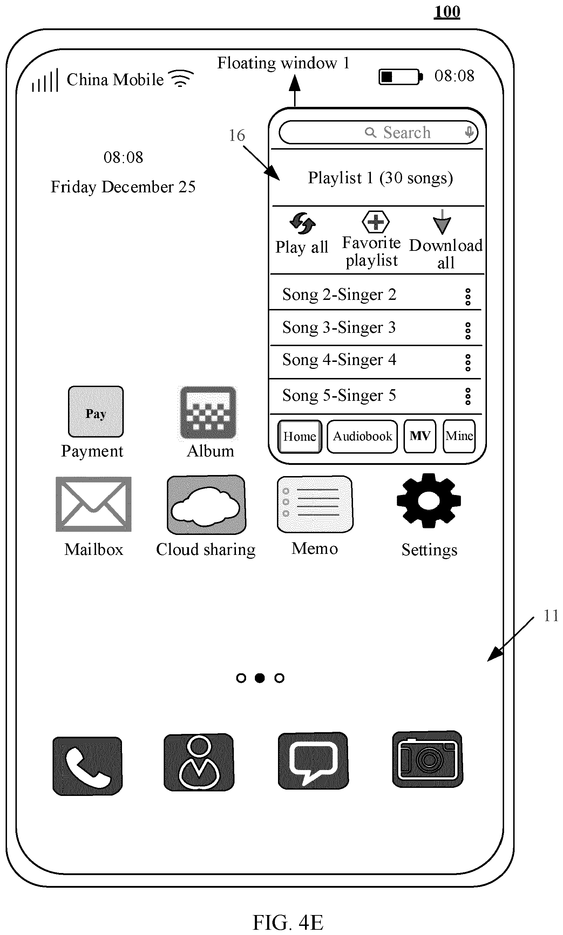

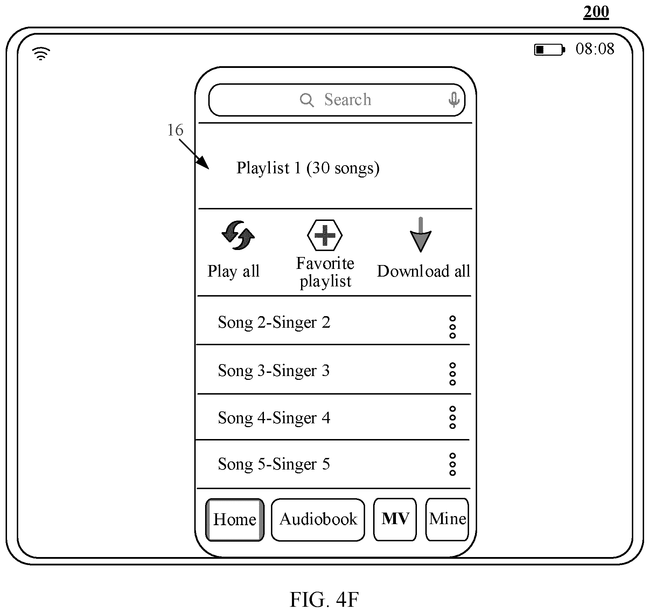

For example, as shown in FIG. 4D, the user interface 12 further includes a control 302. The control 302 may receive an input operation (for example, a touch operation) performed by the user. In response to the input operation, the electronic device 200 sends touch information of the input operation to the electronic device 100. Based on the touch information of the foregoing input operation, in response to the foregoing input operation, the electronic device 100 displays, in the floating window 1, a playlist interface 16 of the music application shown in FIG. 4E, and sends image data corresponding to the playlist interface 16 to the electronic device 200. The electronic device 200 displays the playlist interface 16 shown in FIG. 4F.

Specifically, in some embodiments, after receiving the touch information that is of the input operation and that is sent by the electronic device 200, the electronic device 100 calculates relative coordinates 1 of the input operation on the music application displayed in full screen on the electronic device 100. The electronic device 100 determines that an application window of the music application that is recently run in the extended display region 1 corresponds to the user interface 12, and determines, based on the relative coordinates 1 and an interface layout of the user interface 12, that the input operation is a touch operation acting on the control 302 in the user interface 12. Further, in response to the foregoing touch operation, the electronic device 100 runs the playlist interface 16 of the music application in the extended display region 1, displays the playlist interface 16 in the floating window, and sends image data in the playlist interface 16 to the electronic device 200.

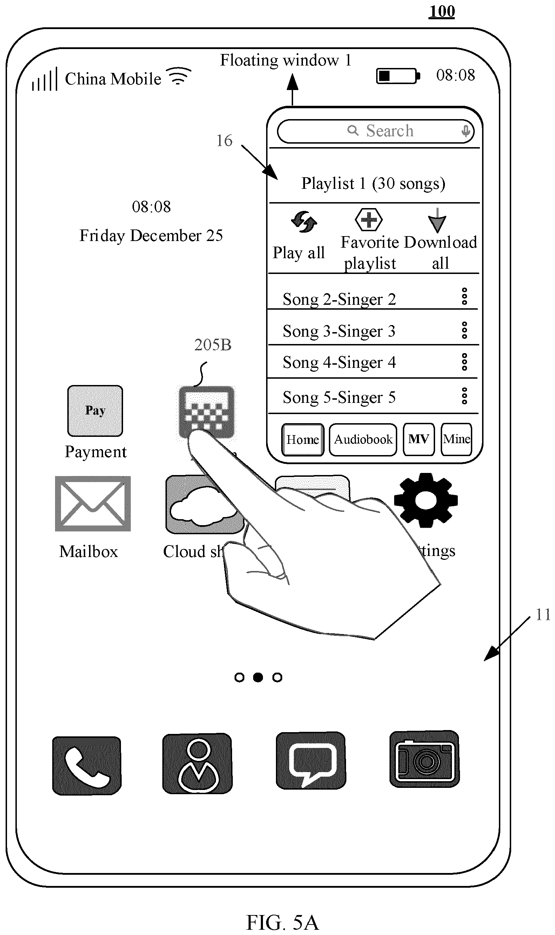

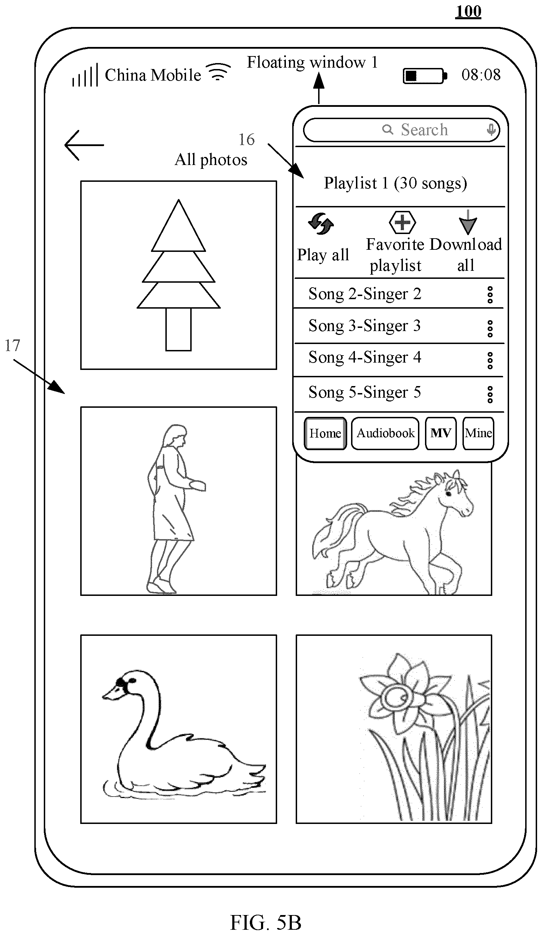

Refer to FIG. 4A to FIG. 4F. In this embodiment of this application, because the home screen and the floating window correspond to two independent display regions, the user may control display content of the application corresponding to the floating window without affecting the display content of the home screen. Conversely, the user may alternatively control the display content of the home screen without affecting the display content of the floating window. For example, refer to FIG. 5A and FIG. 5B. An Album icon 205B is displayed in the main interface 11 displayed on the home screen. In response to an input operation on the Album icon 205B, the electronic device 100 displays a user interface 17 of an album application, and continues to display the floating window 1 on the user interface 17 in a superimposed manner.

In addition, in some application scenarios, the user may directly cast the application 1 on the electronic device 100 to the electronic device 200 without first invoking a floating window corresponding to the application 1, and the user may perform, on the electronic device 100, forward control on the application 1, or may perform, on the electronic device 200, reverse control on the application 1.

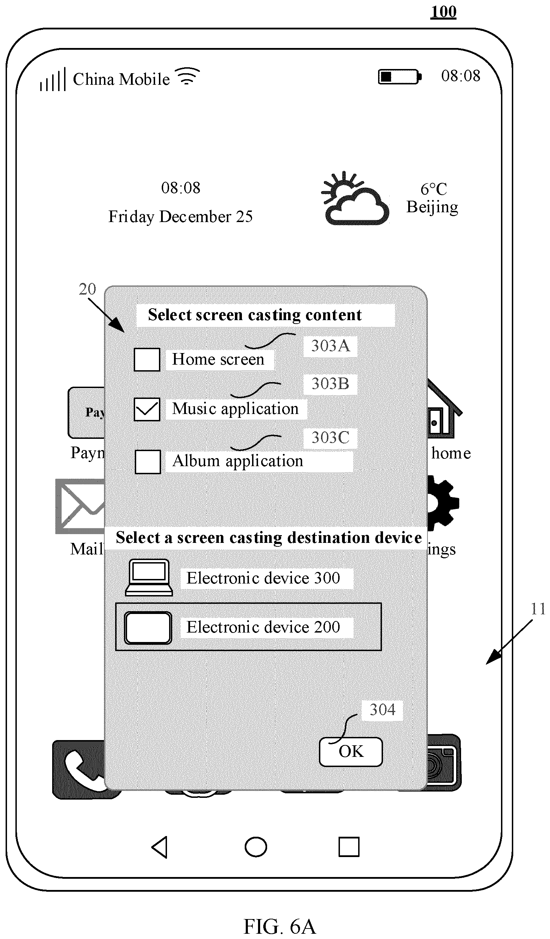

For example, refer to FIG. 6A. In response to an input operation (for example, a tap operation acting on the Screen casting icon 207A) performed by the user, the electronic device 100 displays a screen casting selection interface 20. The screen casting selection interface 20 includes a content option 303A corresponding to the home screen and a content option corresponding to at least one application (for example, a content option 303B corresponding to a music application and a content option 303C corresponding to an album application), an option (for example, the electronic device 200 and the electronic device 300) corresponding to at least one screen casting destination end, and an OK control 207A. In an implementation, the at least one application is an application that is currently run in the foreground and the background of the electronic device 100.

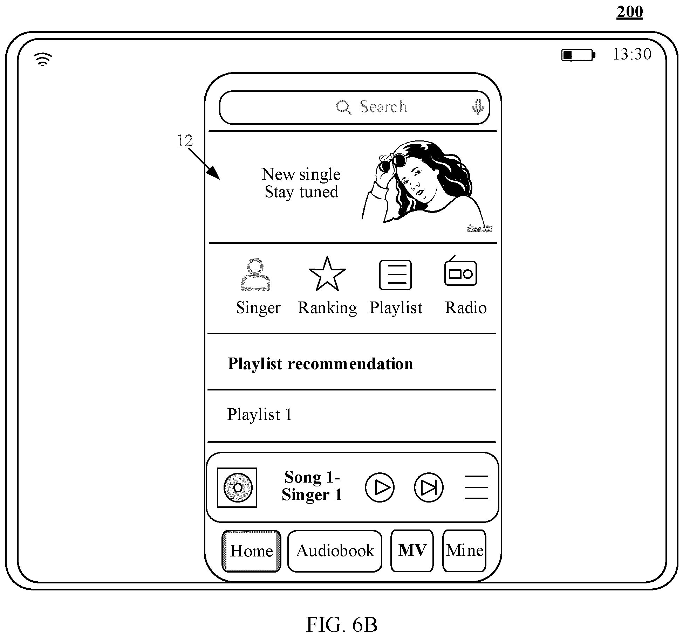

The user selects the content option 303B corresponding to the music application and the electronic device 200. In response to an input operation on the OK control 207A, the electronic device 100 creates an extended display region (for example, Extend Display1) corresponding to the music application, and moves the music application from a home screen display region to the extended display region 1. The electronic device 100 runs the remaining applications (including a desktop application) other than the music application in the home screen display region. Then, the electronic device 100 sends image data of the music application run in the extended display region to the electronic device 200. The image data of the music application may be image data corresponding to an application window in which the music application is recently run or may be image data in a home page of the music application. For example, the electronic device 200 displays, based on the image data sent by the electronic device 100, the home page of the music application shown in FIG. 6B, that is, the user interface 12.

In application scenarios shown in FIG. 6A and FIG. 6B, the user may perform, on the electronic device 200, reverse control on the music application through the user interface 12 that is displayed by screen casting, or may open the music application on the electronic device 100, to perform forward control on the music application. For specific implementation, refer to descriptions of related embodiments of FIG. 4A to FIG. 4F. Details are not described herein again.

In addition, not limited to the screen casting manner shown in FIG. 6A, the specified application may be directly casted to the screen casting destination end in another screen casting manner in embodiments of this application.

**Scenario 2:** In this scenario, in response to an input operation performed by a user, the electronic device 100 may display display content of a home screen and a floating window 2 in a superimposed manner, where the floating window 2 is configured to display an application window 1 of an application 1, and may cast display content of the application window 1 in the floating window to the electronic device 200. The user may view, in real time in the floating window 2, the application window 1 that is being casted, perform, on the electronic device 100, forward control on the application window 1, and perform, on the electronic device 200, reverse control on the application window 1.

The application window 1 may be an application window of the application 1, or may be an application subwindow embedded in the application window of the application 1. In this application, the application subwindow may also be referred to as an application window.

**Descriptions are provided below by using an example in which the application 1 is a conference application.**

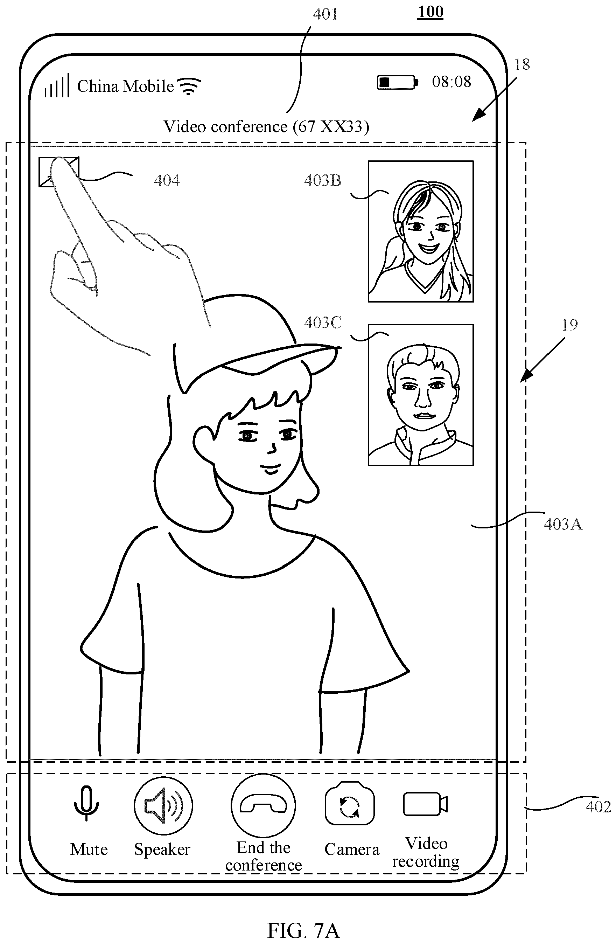

For example, FIG. 7A shows a video conference interface 18. The video conference interface 18 includes a conference name 401, a menu bar 402, and a video call content 19.

The menu bar 402 includes a plurality of controls for controlling a video conference, for example, a Mute control, a Speaker control, an End the conference control, a camera switching control, and a Video recording control. The video call content 19 includes at least one display region, for example, a display region 403A, a display region 403B, and a display region 403C. The display region 403A may be configured to display an image captured by a camera of the electronic device 100. The display region 403B may be configured to display an image captured by a camera of an electronic device of a video contact 1. The display region 403C may be configured to display an image captured by a camera of an electronic device of a video contact 2.

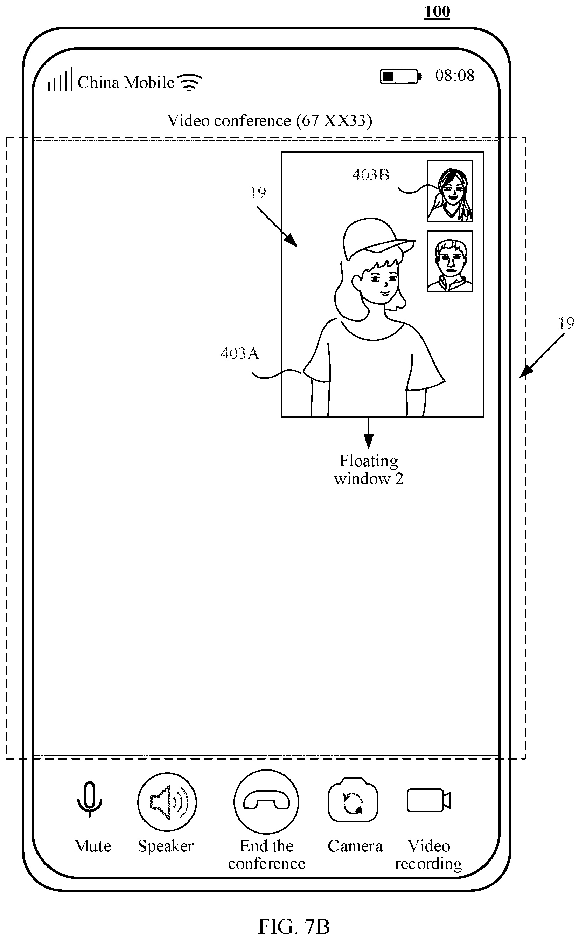

In this embodiment of this application, when the electronic device displays the video conference interface 18, the electronic device 100 may receive an interface floating operation performed by the user on video call content 19. As shown in FIG. 7B, in response to the foregoing interface floating operation, the electronic device 100 runs the video call content 19 of the conference application in a form of a floating window, and displays a floating window 2 corresponding to the video call content 19 on the user interface 18 in a superimposed manner. Display content of the floating window 2 is the zoomed-out video call content 19. A blank region (for example, a black blank area or a white blank region) may be displayed in a region that originally displays the video call content 19 in the video conference interface 18 shown in FIG. 7B.

It should be noted that, the video call content 19 may be an application subwindow embedded in an application window corresponding to the video conference interface 18.

In some embodiments, the video call content 19 includes a floating control 404 shown in FIG. 7A, and the interface floating operation may be a touch operation acting on the floating control 404. Not limited to the interface floating operation shown in FIG. 7A, the electronic device 100 may be triggered through another input operation to display the floating window 2 in embodiments of this application. This is not specifically limited herein.

Specifically, in an implementation, in response to the interface floating operation on the video call content 19, the electronic device 100 creates an extended display region 1 corresponding to the video call content 19, and moves the application window 1 corresponding to the video call content 19 from a home screen display region to the extended display region 1. The remaining application windows other than the application window 1 corresponding to the video call content 19 in the conference application and the remaining applications (including a desktop application) other than the conference application are run in the home screen of the electronic device 100. The home screen of the electronic device 100 determines display content of the home screen based on image data corresponding to an application window run recently in the home screen display region, and determines, based on image data (for example, the user interface 18) corresponding to the video call content 19 run in the extended display region 1, display content of the floating window 2. Then, the electronic device 100 superimposes the floating window 2 on the display content of the home screen. It may be understood that the extended display region 1 is for running the application window 1 corresponding to the video call content 19 of the conference application, and the floating window 2 may be configured to display the display content corresponding to the application window 1.

In this embodiment of this application, the electronic device 100 may receive a screen casting operation performed by a user, and in response to the screen casting operation, the electronic device 100 may cast display content of the floating window 2 or display content of the home screen to the electronic device 200.

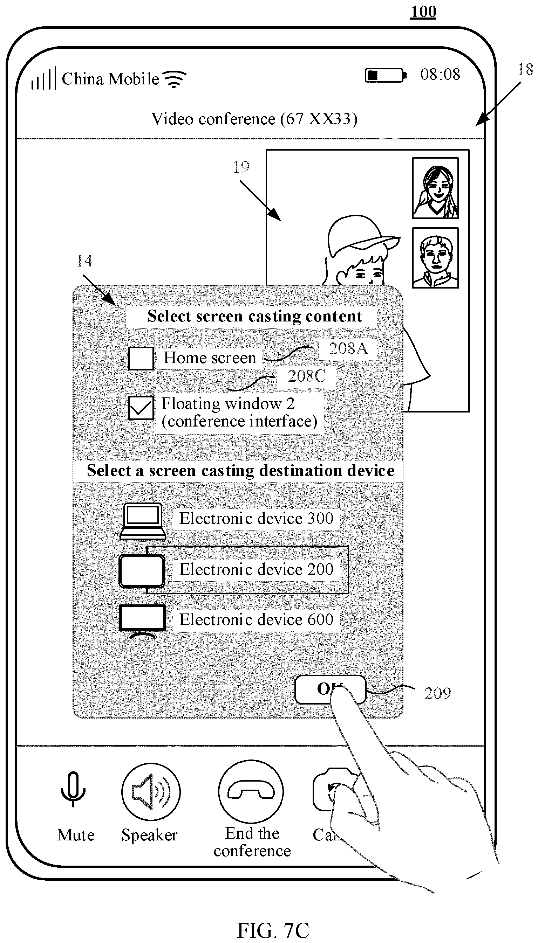

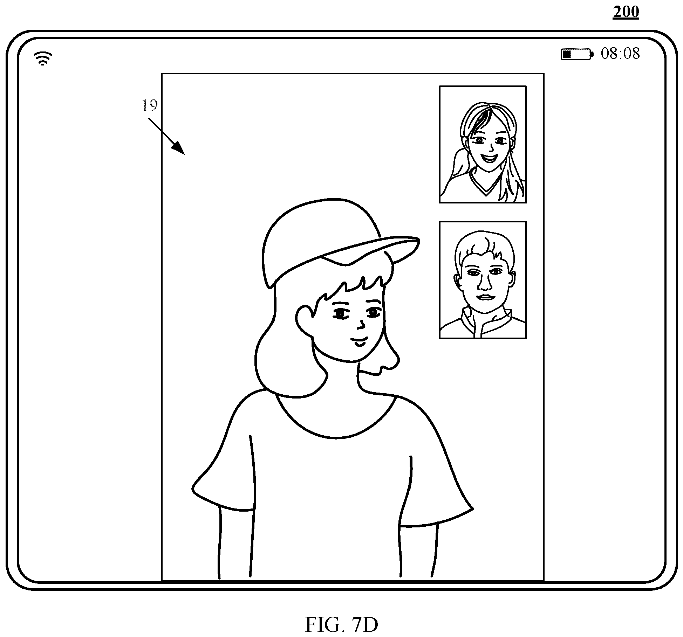

In an implementation, similarly to the scenario 1, the user invokes the screen casting selection interface 14 shown in FIG. 7C, and the screen casting selection interface 14 includes content options corresponding to the floating window 2. For example, after the user selects a content option 208C corresponding to the floating window 2, and selects the electronic device 200 as a screen casting destination end, the electronic device 100 sends image data of the video call content 19 in the floating window 2 to the electronic device 200 in response to the input operation on the control 209. The electronic device 200 displays the video call content 19 shown in FIG. 7D based on the image data sent by the electronic device 100.

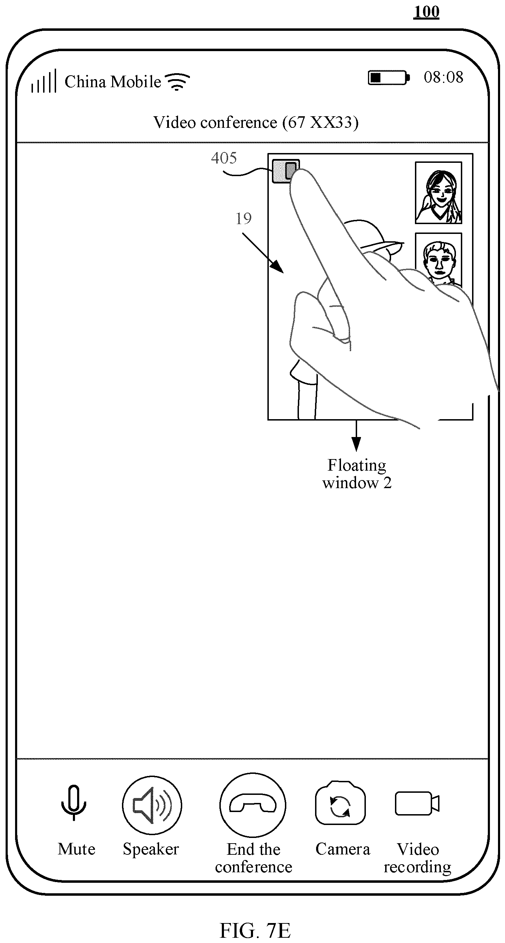

In an implementation, the electronic device 100 displays a screen casting control 405 of the video call content 19 shown in FIG. 7E. The screen casting control 405 may receive an input operation performed by the user. In response to the foregoing input operation, the electronic device may directly cast display content of the floating window 2 to a specific screen casting destination end.

Not limited to the screen casting manner shown in FIG. 7C to FIG. 7E, screen casting may be performed in another screen casting manner in embodiments of this application.

In embodiments of this application, the electronic device 100 may adjust, based on a size of the floating window 2, a size of the video call content 19 displayed in the floating window 2, to adapt the video call content 19 displayed in FIG. 7B to the size of the floating window 2. The electronic device 100 may further adjust, based on the size of the electronic device 200, a size of the video call content 19 casted to the electronic device 200, to adapt the video call content 19 shown in FIG. 7D to the size of the display screen of the electronic device 200.

**In embodiments of this application, the user may perform, on the electronic device 200,** reverse control on the video call content 19.

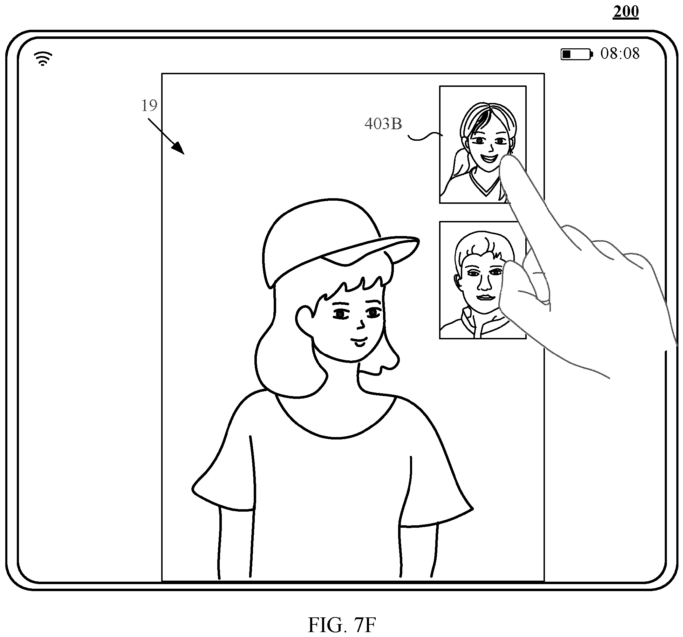

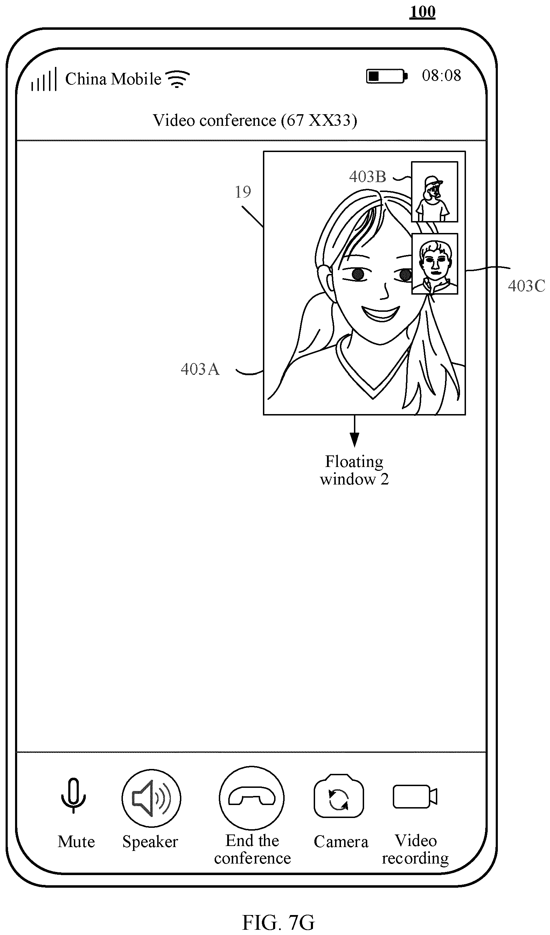

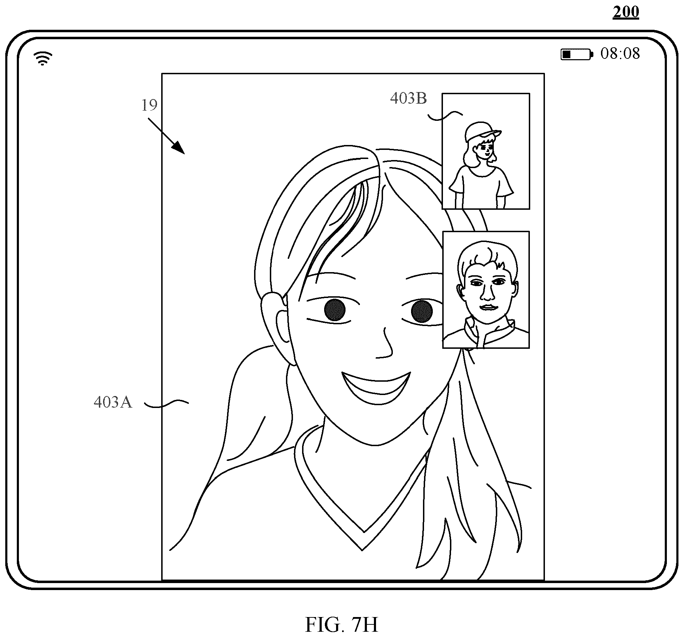

For example, as shown in FIG. 7F, the user taps a display region 403B in the video call content 19 displayed by the electronic device 200, and the electronic device 200 detects the input operation, and sends touch information of the input operation to the electronic device 100. The electronic device 100 determines, based on the touch information of the input operation, that the input operation is a tap operation acting on the display region 403B. As shown in FIG. 7G, in response to the foregoing input operation, the electronic device 100 switches a video source of the display region 403A and a video source of the display region B, that is, displays the image captured by the camera of the electronic device of the video contact 1 in the display region 403A, and display the image captured by the camera of the electronic device 100 in the display region 403B, and sends, in real time to the electronic device 200, image data of the video call content 19 with the display regions switched. The electronic device 200 displays the video call content 19 with the display regions switched shown in FIG. 7H.

For details, refer to the description about performing reverse control on screen casting content by the electronic device 200 in the related embodiment of the scenario 1. Details are not described herein again.

**In embodiments of this application, the user may perform, on the electronic device 100 through the floating window 2, forward control on the video call content 19.**

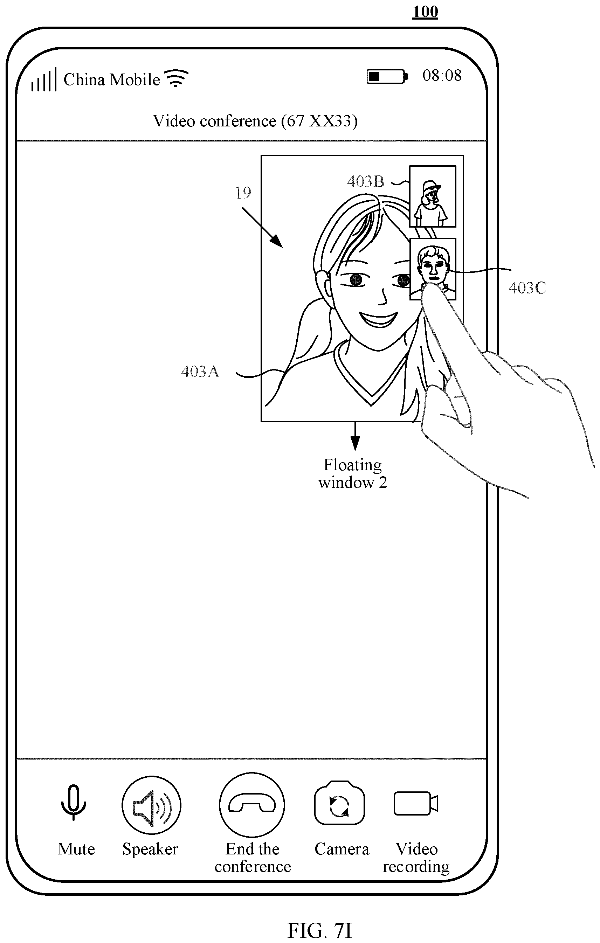

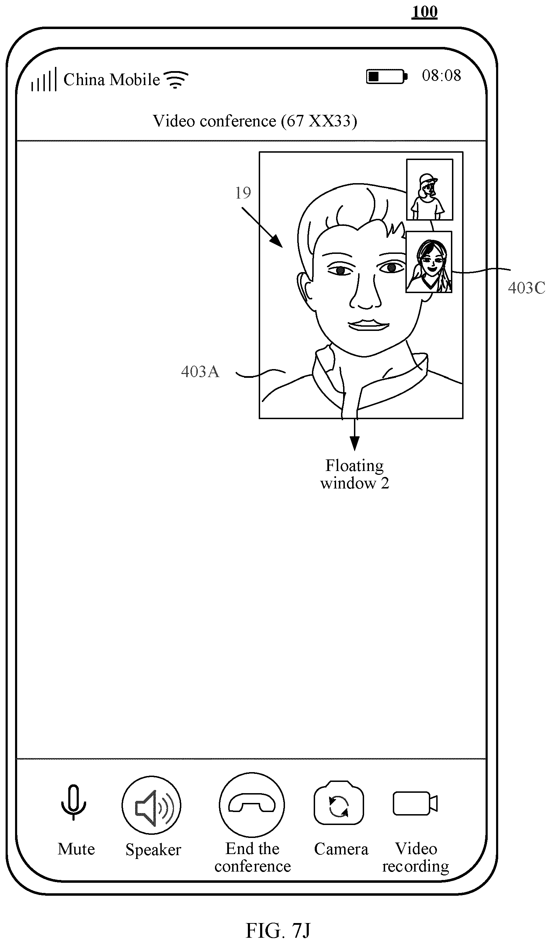

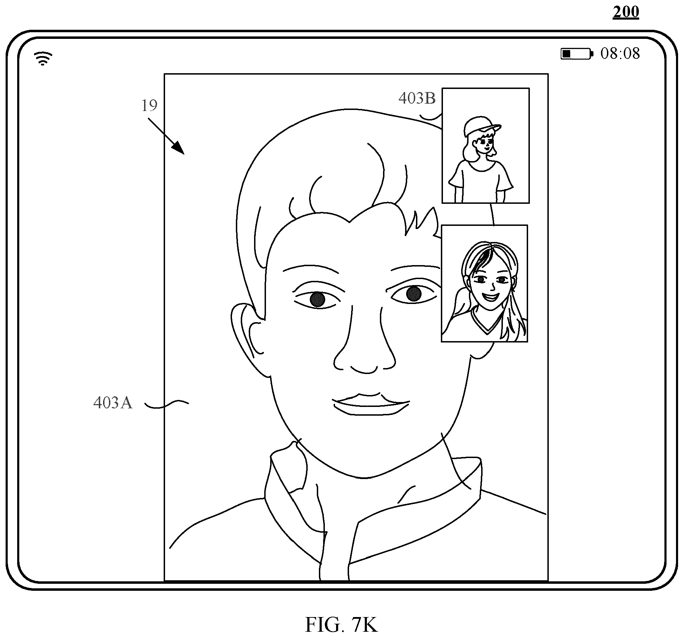

For example, the electronic device 100 may detect an input operation acting the display region 403C shown in FIG. 7I. As shown in FIG. 7J, in response to the foregoing input operation, the electronic device 100 may switch a video source of the display region 403A and a video source of the display region 403C, that is, displays the image captured by the camera of the electronic device of the video contact 2 in the display region 403A, and display the image captured by the camera of the electronic device of the video contact 1 in the display region 403B, and sends, to the electronic device 200, image data of the video call content 19 with the display regions switched. The electronic device 200 displays the video call content 19 shown in FIG. 7K.

For details, refer to the description about performing forward control on screen casting content by the electronic device 100 in the related embodiment of the scenario 2. Details are not described herein again.

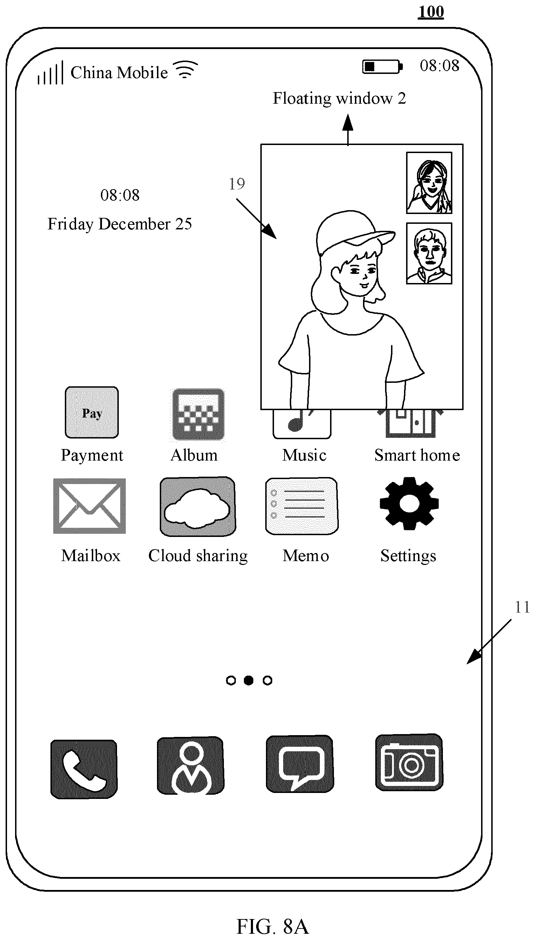

Refer to FIG. 7A to FIG. 7K. In this embodiment of this application, the user may control, on the electronic device 100, display content corresponding to the floating window 2 without affecting display content of the home screen. Conversely, the user may alternatively control display of the home screen without affecting the display content of the floating window. For example, as shown in FIG. 8A, in response to the detected input operation, the electronic device 100 displays the main interface 11, and continues to display the floating window 2 on the main interface 11 in a superimposed manner.

In some embodiments, the floating window 2 is configured to display the video call content 19 of the video conference application. Alternatively, the user may perform forward control on the video call content 19 through a user interface of the video conference application displayed on the home screen.

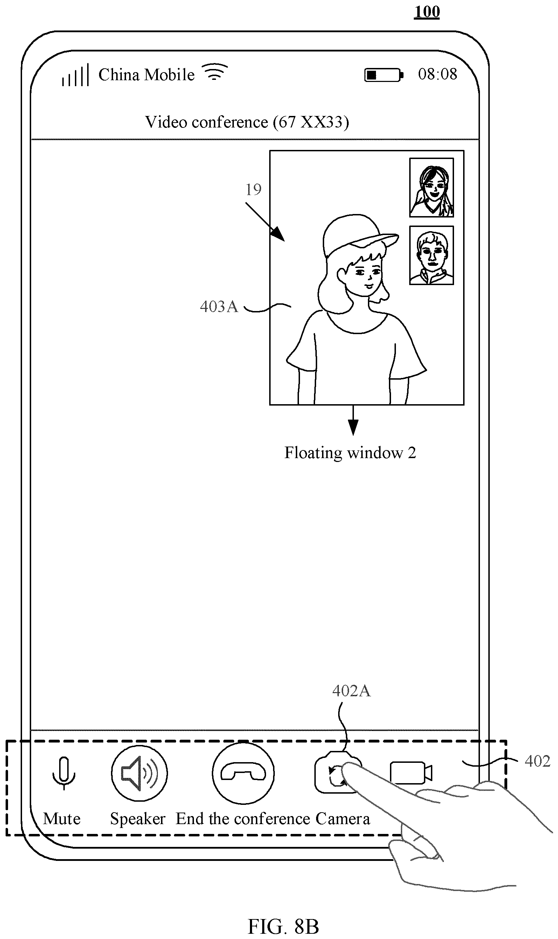

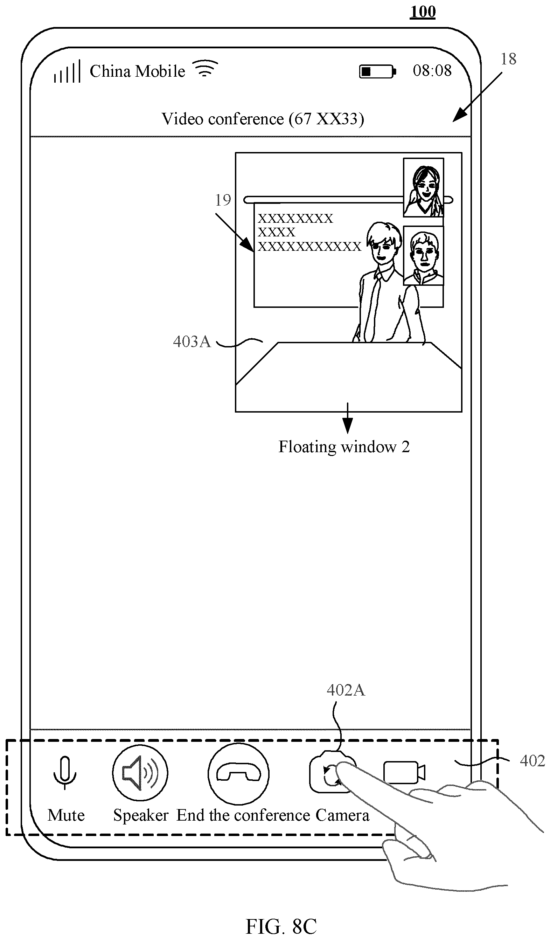

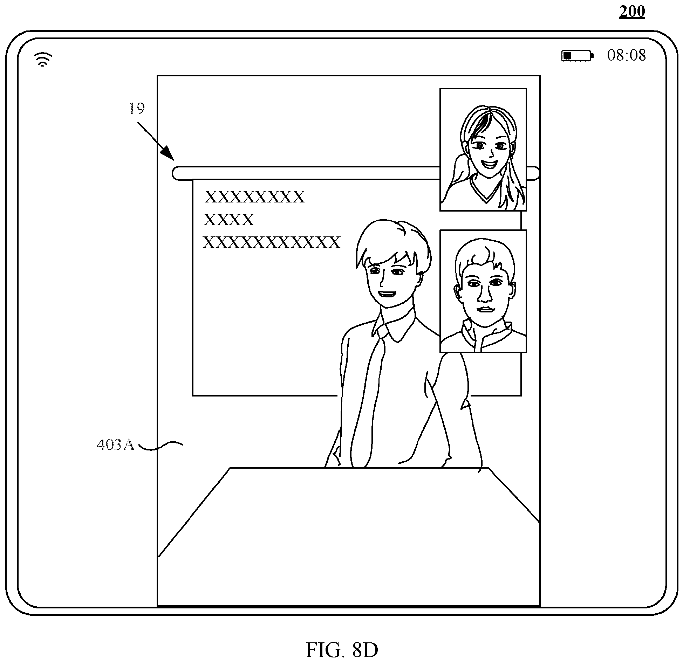

For example, the electronic device 100 includes, for example, a front-facing camera and a rear-facing camera. The display region 403A shown in FIG. 8B displays an image captured by the front-facing camera of the electronic device 100, and the menu bar 402 shown in FIG. 8B includes a camera switch control 402A. In response to an input operation for the camera switch control 402A, the electronic device 100 switches the front-facing camera of a video call to the rear-facing camera, displays the image captured by the rear-facing camera shown in FIG. 8C in the display region 403A, and casts, to the electronic device 200, image data of the video call content 19 with the camera switched. The electronic device 200 displays the video call content 19 shown in FIG. 8D.

Similarly to scenario 1, in this embodiment of this application, the electronic device 100 may cast at least one type of screen casting content to at least one screen casting destination end. The user may switch, through the electronic device 100 or the electronic device 200, a content option casted to the electronic device 200. The user may further adjust a display position and/or a display size of the floating window 2 on the display 194. For details, refer to the related embodiment of the scenario 1. None of the details is described herein again.

In addition, in some application scenarios, the user may also directly cast image data corresponding to a specific application window of the application 1 on the electronic device 100 to the electronic device 200 without first invoking a floating window corresponding to the specific application window. The user may perform, on the electronic device 100, forward control on display content corresponding to the specific application window, or perform, on the electronic device 200, reverse control on the display content corresponding to the specific application window.

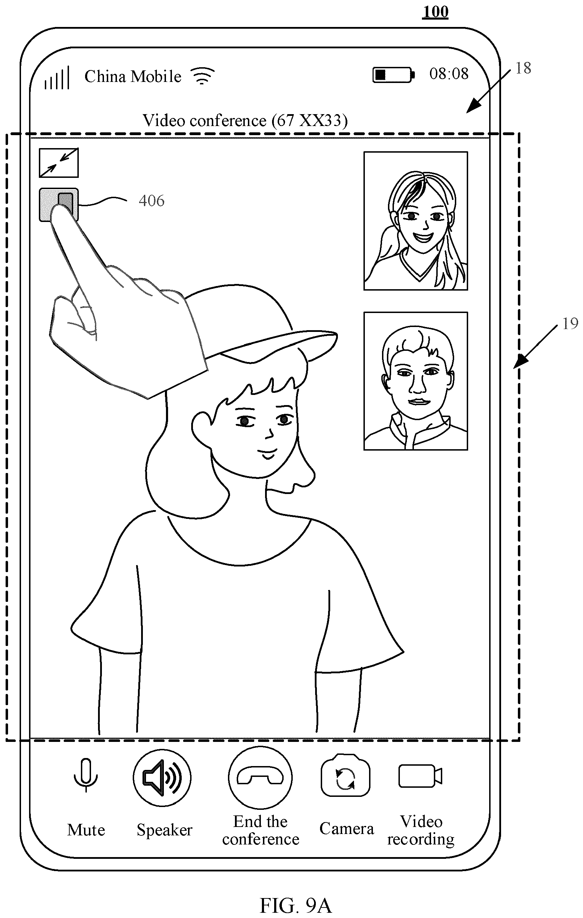

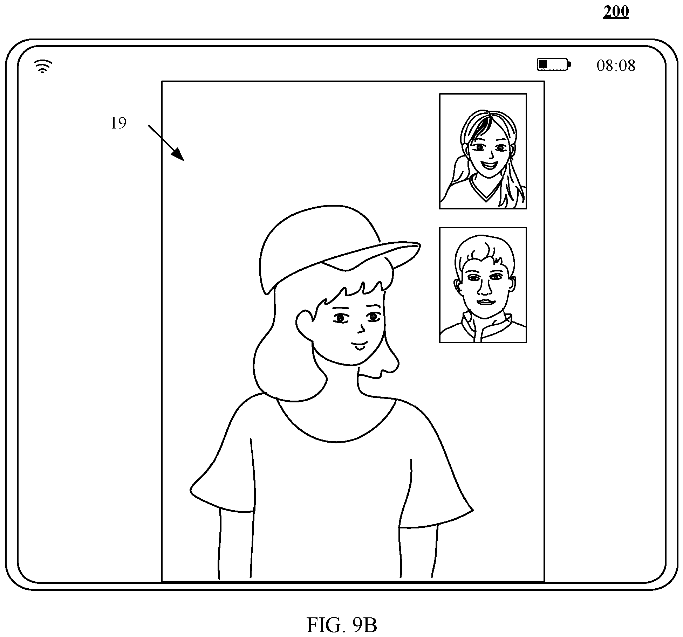

For example, the specific application window is an application window 1 corresponding to the video display content 19. Refer to FIG. 9A. The video conference interface 18 displays a screen casting control 406 for video display content 19. In response to the input operation for the screen casting control 406, the electronic device 100 creates an extended display region (for example, Extend Display1) corresponding to the application window 1, and moves the application window 1 from the home screen display region to the extended display region 1. The electronic device 100 runs the remaining application windows other than the application window 1 in the home screen display region. Then, the electronic device 100 sends the image data in the application window 1 run in the extended display region to the electronic device 200. The electronic device 200 displays the video display content 19 shown in FIG. 9B based on the image data in the application window 1 sent by the electronic device 100.

In the application scenario in which the video display content 19 is directly sent to the electronic device 200 shown in FIG. 9A and FIG. 9B, the user may perform, on the electronic device 200 through the video display content 19 displayed by screen casting, reverse control on the video display content 19, or may display the video display content 19 on the electronic device 100, and then perform forward control on the video display content 19. For specific implementation, refer to descriptions of related embodiments of FIG. 4A to FIG. 4F. Details are not described herein again.

In addition, not limited to the screen casting manner shown in FIG. 9A and FIG. 9B, the display content corresponding to the specified specific application window may be directly casted to the screen casting destination end in another screen casting manner in embodiments of this application. Details are not described herein again.

**With reference to the foregoing related descriptions of the scenario 1 and the scenario 2,** in embodiments of this application, the electronic device 100 may create an extended display region for the specified application 1 (or the specified application window 1), to isolate the application 1 (or the application window 1) from other content run in the home screen display region. Because the display content of the home screen and the application 1 (or the application window 1) correspond to two independent display regions, the electronic device 100 may display the application 1 (or the application window 1) on the display content of the home screen in a superimposed manner through a floating window in response to an input operation performed by the user, cast image data corresponding to the application 1 (or the application window 1) to the screen casting destination end, and can effectively implement, on the electronic device 100, forward control on display content of the floating window and implement, on the screen casting destination end, reverse control on the screen casting content. In addition, in a conventional solution of implementing screen casting by performing content filtering and image synthesis for screen mirroring, a filtered application needs to provide layer identifier adaptation. Because an application has a plurality of layers, missed screen casting or multi-screen casting may occur. However, in embodiments of this application, the electronic device 100 performs screen casting display based on image data corresponding to the home screen display region or the extended display region, to effectively avoid missed screen casting and multi-screen casting.

The following describes a software system of the electronic device 100 in embodiments of this application with reference to the accompanying drawings.

In embodiments of this application, a software system of the electronic device 100 may use a layered architecture, an event-driven architecture, a micro kernel architecture, a micro service architecture, or a cloud architecture. In embodiments of this application, the software structure of the electronic device 100 is described by using an Android system with a layered architecture as an example.

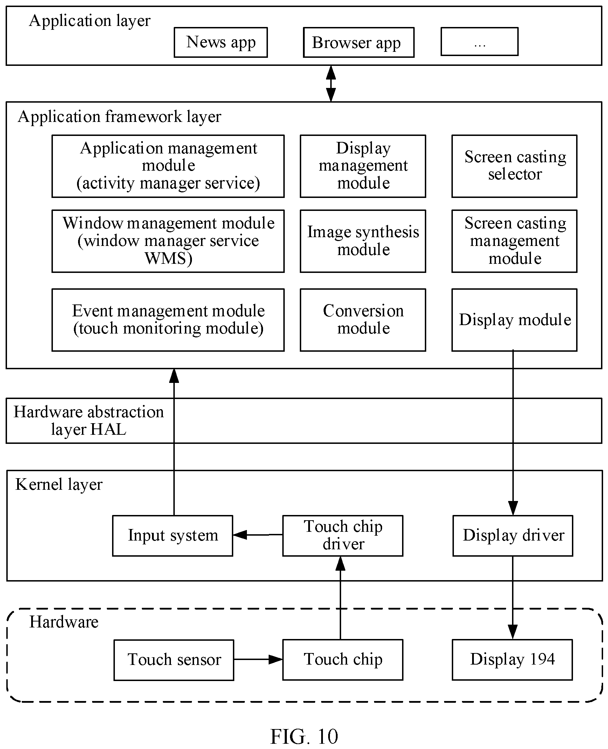

For example, FIG. 10 is a block diagram of a software architecture of an electronic device 100 according to an embodiment of this application.

As shown in FIG. 10, in the layered architecture, software is divided into several layers, and each layer has a clear role and task. The layers communicate with each other through a software interface. In some embodiments, the Android system is divided into an application layer, an application framework layer, a hardware abstraction layer (Hardware Abstract Layer, HAL), and a kernel layer (kernel) from top to bottom. Specifically,

the application layer includes a series of application packages, such as an instant messaging application, a music application, and a gallery application.

The application framework layer provides an application programming interface (application programming interface, API) and a programming framework for an application at the application layer. The application framework layer includes some predefined functions.

The Android Runtime includes a core library and a virtual machine. The Android runtime is responsible for scheduling and management of the Android system.

The core library includes two parts: One part is a performance function that the Java language needs to invoke, and the other part is a core library of Android.

The application layer and the application framework layer are run in the virtual machine. The virtual machine executes Java files of the application layer and the application framework layer as binary files. The virtual machine is configured to implement functions such as object life cycle management, stack management, thread management, security and abnormality management, and garbage collection.

As shown in FIG. 10, in embodiments of this application, the application framework layer may include a window management module, an application management module, an event manager service (input manager service, IMS), a display management module, an image synthesis module, a screen casting selector, a screen casting management module, and a conversion module.

The window management module is configured to manage creation, display, and hiding of an application window. The application window may be an application window in an Android system, or may be an application window in an iOS system, or may be an application window in another operating system. This is not specifically limited herein. One application includes a plurality of application windows, and one application window corresponds to one or more user interfaces. For ease of description, an application window may be referred to as a window for short in embodiments of this application.

In some embodiments, the window management module includes a window manager service (Window Manager Service, WMS), where the WMS is a system service of an Android system, and controls display and hiding of all windows. The WMS assigns interfaces (Surfaces) to all windows, manages display sequences, sizes, and positions of surfaces, controls window animations, and is an important transfer station for the input system.

The application management module may be configured to obtain a window ratio of a currently run application window of an application. In some embodiments, the application window is displayed on the display 194 in a form of a floating window. A size of the floating window is less than a size of the application window displayed in full screen, and a window ratio of the floating window may be a size ratio of the floating window to the window displayed in full screen.

In some embodiments, the application management module includes an activity manager service (activity manager service, AMS). The AMS is a system service of an Android (Android) system, and is configured to properly schedule and run different applications in a system, and manage an activity task stack. The AMS is responsible for scheduling activities of applications, managing processes (processes) of the applications, managing the memory, scheduling services (services), scheduling tasks (tasks), and querying a current running status of the system. The application management module may determine, based on the activity task stack, whether the application is a top-level application run in the foreground, an application run in the foreground, or an application run in the background.

The event management module is configured to manage input events and event distribution of the entire system. In some embodiments, the event management module includes a touch monitoring module, and the touch monitoring module is configured to monitor and determine an input event on the touchscreen. In some embodiments, the touch monitoring module may determine, through the AMS, a top-level activity of an application run in the foreground, and determine, with reference to an interface layout corresponding to the top-level activity and an original event corresponding to the touch operation, an input event corresponding to the touch operation.

The display management module is configured to manage physical display and/or virtual display of the electronic device 100, and specifically, is configured to manage a life cycle of interface display of the electronic device, determine how to control, based on a currently connected physical display screen and/or virtual display screen, logical display of the currently connected physical display screen and/or virtual display screen, send a notification to a system and an application when a display state changes, and so on. The display management module may include a home screen display region or an extended display region. For details, refer to related descriptions in FIG. 1B. Details are not described herein again.

The image synthesis module is configured to synthesize an image based on corresponding image data in the home screen display region and/or corresponding image data in the extended display region. In some embodiments, the image synthesis module is configured to display the floating window on the display content of the home screen in a superimposed manner, to synthesize final display content of the display 194.

The screen casting selector is configured to determine screen casting content. The screen casting content may be image data corresponding to an application window run in the home screen display region, or may be image data corresponding to an application window run in an extended display region (for example, Extend Display1). In some embodiments, the screen casting selector is further configured to determine a screen casting destination end. In an implementation, refer to FIG. 1B. When the screen casting selector determines the screen casting destination end, the electronic device 100 may send a screen casting request to the screen casting destination end through a wireless port or a wired port, and after receiving a screen casting response that is sent by screen casting by the screen casting destination end and that agrees to the screen casting, send the screen casting content to the screen casting destination end.

The screen casting management module is configured to obtain image data of the screen casting content from the display management module.

The conversion module is configured to calculate relative coordinates of a touch operation acting on the floating window, so that the user can perform forward control on display content of the floating window, and is further configured to calculate relative coordinates of a touch operation acting on the screen casting content displayed by the electronic device 200, so that the user can perform reverse control on the screen casting content.

The kernel layer is a layer between hardware and software. The HAL layer and the kernel layer (kernel) may perform corresponding operations in response to functions invoked by the application framework layer. As shown in FIG. 10, the kernel layer may include an input system, a touch chip driver, a display driver, and the like. In some embodiments, the kernel layer may further include a sensor driver, a camera driver, an audio driver, and the like. Each driver is configured to abstract hardware to hide a specific channel of the hardware, so that an application can access (or invoke) the hardware.

Based on the foregoing software architecture, the following uses an example to describe specific implementation of the screen casting method provided in embodiments of this application.

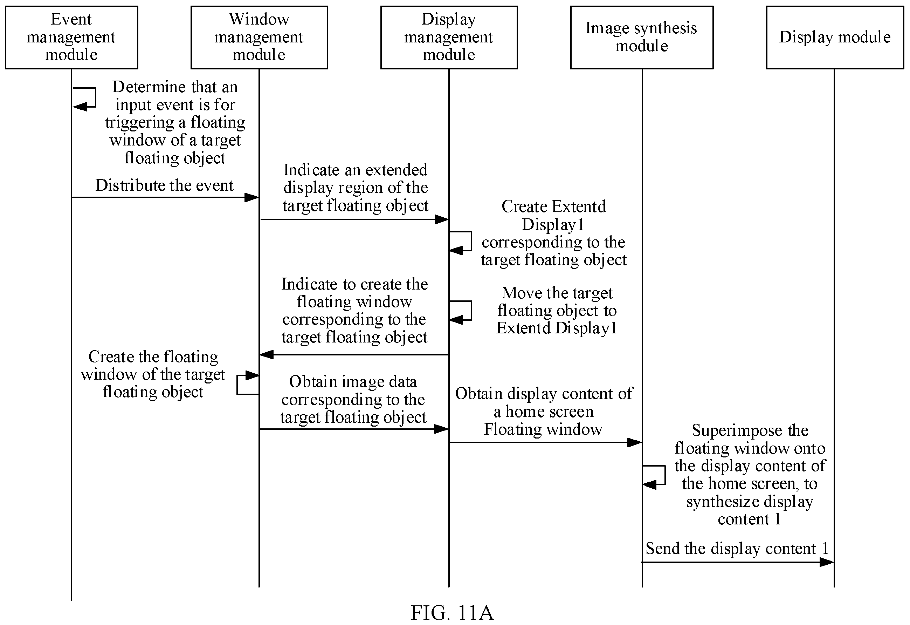

In embodiments of this application, the electronic device 100 detects a floating operation on a target floating object. In response to the floating operation, the electronic device 100 displays a floating window on display content of the home screen in a superimposed manner. The floating window is configured to display display content corresponding to the target floating object. Refer to related descriptions of the scenario 1 and the scenario 2. The target floating object may be a specified application (for example, the foregoing music application), and correspondingly, the floating operation may be the foregoing application floating operation. Alternatively, the target floating object may be a specified application window (for example, the foregoing video display region 19) of an application. Correspondingly, the floating operation may be the foregoing interface floating operation. For example, for a specific implementation procedure of the electronic device 100, refer to FIG. 11A.

In some embodiments, the touch sensor 180K receives a touch operation 1 (for example, a floating operation performed by the user), a corresponding hardware interrupt is sent to a touch chip, and the touch chip sends touch information of the touch operation to the touch chip driver at the kernel layer. The touch chip driver sends the touch information to the input system, and the input system processes the touch operation 1 into an original input event (including information such as touch coordinates, a touch time, and/or a touch trajectory). The original input event is stored at the kernel layer. The event management module obtains the original input event from the kernel layer, and determines, with reference to an interface layout corresponding to a recently run application window, that the original input event is for triggering a floating window of the target floating object. The event management module distributes the event to the window management module. The window management module indicates the display management module to create an extended display region corresponding to the target floating object. The display management module creates the extended display region corresponding to the target floating object, that is, Extend Display1, and indicates the window management service to complete creation of the floating window of the target floating object. The display management module obtains image data corresponding to the target floating object from the window management module, and caches the image data to Extend Display1. The image synthesis module obtains display content of the home screen from a home screen display region in the display management module, obtains display content of the floating window from Extend Display1, displays the floating window on the display content of the home screen in a superimposed manner, and synthesizes display content 1. The image synthesis module sends the display content 1 to the display module, and the display module invokes the display driver to send the display content to the display 194.

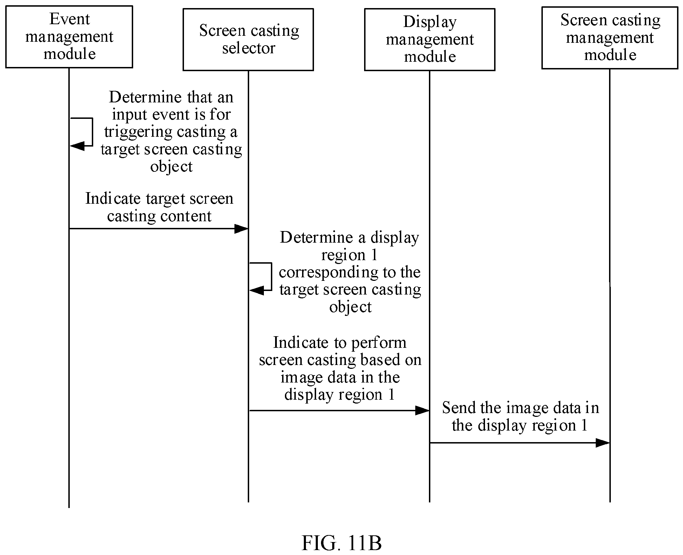

In embodiments of this application, the electronic device 100 detects a screen casting operation on target screen casting content. In response to the screen casting operation, the electronic device obtains image data of the target screen casting content from a display region corresponding to the target screen casting content, and sends the image data to the screen casting destination end. Refer to related descriptions of the scenario 1 and the scenario 2. The target screen casting content may be the home screen, and correspondingly, a display region corresponding to the target screen casting content is the home screen display region. Alternatively, the target screen casting content may be the floating window, and correspondingly, a display region corresponding to the target screen casting content is Extend Display1. For example, for a specific implementation procedure of the electronic device 100, refer to FIG. 11B.

The touch sensor 180K receives a touch operation 2 (that is, a screen casting operation performed by the user), a corresponding hardware interrupt is sent to the touch chip, the touch chip driver sends touch information of the touch operation 2 to the input system, and the input system processes the touch operation 2 into an original input event. The event management module obtains the original input event from the kernel layer, and determines, with reference to an interface layout corresponding to a recently run application window, that the original input event is for triggering casting target screen casting content. The event management module indicates the target screen casting content to the screen casting selector. The screen casting selector determines a display region 1 (that is, the home screen display region or Extend Display1) corresponding to the target screen casting content, and indicates the display management module to perform screen casting based on image data in the display region 1. The display management module sends the image data in the display region 1 to the screen casting management module. The screen casting management module sends the image data to the screen casting destination end through a wired port or a wireless port.

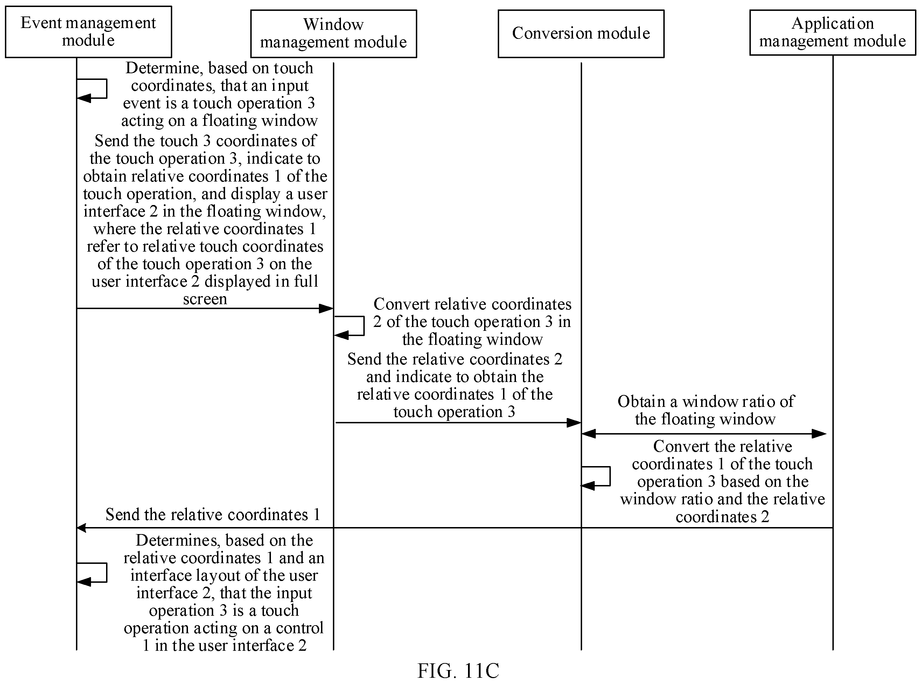

In this embodiment of this application, the electronic device 100 detects a touch operation 3 on display content 2 of a target floating object in the floating window, and in response to the touch operation 3, the electronic device 100 displays, in the floating window, display content 3 corresponding to the target floating object. Refer to related descriptions of the scenario 1 and the scenario 2. The target floating object may be a specified application. For example, the target floating object is the music application, the display content 2 is the user interface 12, the touch operation 3 is a touch operation acting on the control 301, and the display content 3 is the playlist interface 16. Alternatively, the target floating object may be a user interface corresponding to a specified application window 1 of an application. For example, the target floating object is the video display content 19, and the display content 2 is the video display content 19 shown in FIG. 7I. The touch operation 3 is a touch operation acting the display region 403C shown in FIG. 7I, and the display content 3 is the video display content 19 shown in FIG. 7J. For example, the user interface 2 is displayed in the floating window. For a specific implementation procedure of the electronic device 100, refer to FIG. 11C.

In some embodiments, the touch sensor 180K receives a touch operation 3, a corresponding hardware interrupt is sent to the touch chip, the touch chip driver sends touch information of the touch operation 3 to the input system, and the input system processes the touch operation 3 into an original input event. The event management module obtains the original input event from the kernel layer, and determines, based on touch coordinates in the original input event, that the touch operation 3 acts on the floating window. The event management module sends touch coordinates of the touch operation 3 to the window management module, and indicates to obtain relative coordinates 1 of the original touch coordinates of the touch operation 3. The relative coordinates 1 refer to relative touch coordinates of the touch operation 3 on the user interface 2 displayed in full screen. The user interface 2 is current display content of the floating window. The window management module calculates relative coordinates 2 of the touch operation 3 in the floating window based on a coordinate system of the floating window and a display position of the floating window on the display 194, and sends the relative coordinates 2 to the conversion module. The conversion module obtains a window ratio of the floating window from the application management module, and calculates the relative coordinates 1 of the touch operation 3 based on the window ratio and the relative coordinates 2. The conversion module sends the relative coordinates 1 of the touch operation 3 to the event management module. The event management module determines, based on the relative coordinates 1 of the touch operation 3 and an interface layout of the user interface 2 run in Extend Display1, that the touch operation 3 is a touch operation acting on the control 1 of the user interface 2. The event management module determines that the touch operation 3 is for triggering the floating window to display display content 3 of the target floating object.

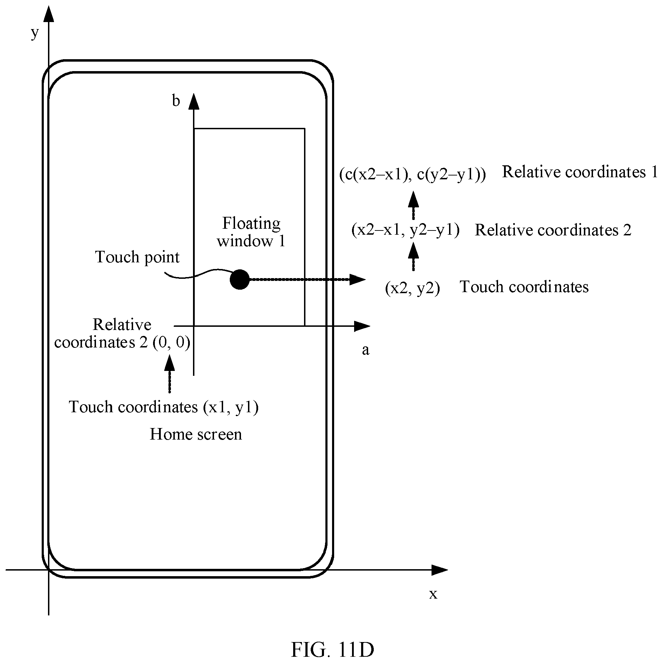

For example, the coordinate system of the home screen is an xy coordinate system shown in FIG. 11D, and the coordinate system of the floating window is an ab coordinate system shown in FIG. 11D. Coordinates (0, 0) in the ab coordinate system of the floating window correspond to coordinates (x1, y1) in the xy coordinate system of the home screen. When the electronic device 100 detects that the touch coordinates of the touch operation 3 include coordinates (x2, y2), the electronic device 100 converts relative coordinates 2 of the coordinates (x2, y2) in the floating window to (x2-x1, y2-y1), and then converts, based on a floating window ratio c and the relative coordinates 2, relative coordinates 1 of the foregoing coordinates (x2, y2) on the user interface 2 displayed in full screen to (c(x2-x1), c(y2-y1)).

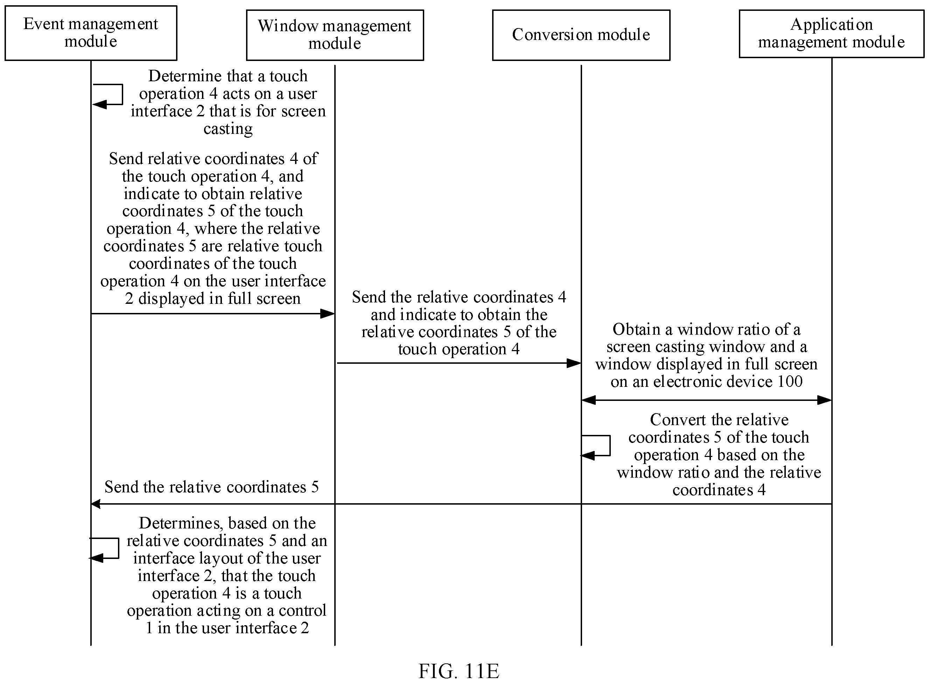

In this embodiment of this application, the electronic device 200 detects a touch operation 4 on display content 4 in the screen casting window, and the electronic device 200 sends touch information of the touch operation 4 to the electronic device 100. The display content 4 may be current display content of the home screen or the floating window of the electronic device 100. The electronic device 100 determines, based on the touch information of the touch operation 4, that the touch operation 4 is for triggering the electronic device 100 to switch screen casting content to display content 5. In response to the touch operation 4, the electronic device 100 switches display content of the home screen or the floating window to the display content 5, and casts the display content 5 to the electronic device 200. Refer to related descriptions of the scenario 1 and the scenario 2. The target floating object may be a specified application. For example, the target floating object is the music application, and the display content 4 is the user interface 12 displayed on the electronic device 200 by screen casting shown in FIG. 4D. The touch operation 4 is a touch operation acting on the control 302 in the user interface 12 displayed on the electronic device 200 by screen casting, and the display content 5 is the playlist interface 16. Alternatively, the target floating object may be a user interface corresponding to a specified application window 1 of an application. For example, the target floating object is the video display content 19, and the display content 4 is the video display content 19 displayed on the electronic device 200 by screen casting shown in FIG. 7F. The touch operation 4 is a touch operation acting the display region 403B shown in FIG. 7F, and the display content 5 is the video display content 19 shown in FIG. 7G and FIG. 7H. For example, the display content 4 is the home screen or the user interface 2 of the floating window. For a specific implementation procedure of the electronic device 100, refer to FIG. 11E.

In some embodiments, after detecting the touch operation 4, the electronic device 200 calculates relative coordinates 4 of the touch operation 4 in the screen casting window based on a display position of the screen casting window of the electronic device 200 on the display screen of the electronic device 200, and sends touch information of the touch operation 4 to the electronic device 100. The touch information of the touch operation 4 includes the relative coordinates 4. After receiving the touch information of the touch operation 4 sent by the electronic device 200, the electronic device 100 sends the touch information to the input system, and the input system processes the touch operation 4 into an original input event. The event management module obtains the original input event from the kernel layer, and determines that the touch operation acts on a user interface 2 that is for screen casting. The event management module sends the relative coordinates 4 of the touch operation 4 to the window management module, and indicates to obtain relative coordinates 5 of the touch operation 4. The relative coordinates 5 are relative touch coordinates of the touch operation 4 on the user interface 2 displayed in full screen. The window management module sends the relative coordinates 4 to the conversion module, and indicates to obtain the relative coordinates 5 of the touch operation 4. The conversion module obtains a window ratio of the screen casting window displayed on the electronic device 200 and the window displayed on the electronic device 100 in full screen, and calculates the relative coordinates 5 of the touch operation 4 based on the window ratio and the relative coordinates 4. The conversion module sends the relative coordinates 5 of the touch operation 4 to the event management module. The event management module determines, based on the relative coordinates 5 of the touch operation 4 and an interface layout of the user interface 2 run in the home screen display region or Extend Display1 of the floating window, that the touch operation 4 is a touch operation acting on the control 1 of the user interface 2. The event management module determines that the touch operation is for triggering switching the screen casting content of the home screen or the floating window to display content 5.

In some embodiments, the electronic device 200 may alternatively send the original touch coordinates of the touch operation 4 and the display position of the screen casting window on the display screen of the electronic device 200 to the electronic device 100, and then the electronic device 100 calculates the relative coordinates 4.

For calculating the relative coordinates 4 of the touch operation 4 in the screen casting window, refer to the calculation manner of the relative coordinates 2 of the touch operation 3. For calculating the relative coordinates 5 of the touch operation 4, refer to the calculation manner of the relative coordinates 1 of the touch operation 3. Details are not described herein again. It should be noted that, FIG. 10 merely illustrates a block diagram of a software structure according to an embodiment of this application. Each layer of the block diagram of the software structure shown in FIG. 10 may further include another module. This is not specifically limited herein.

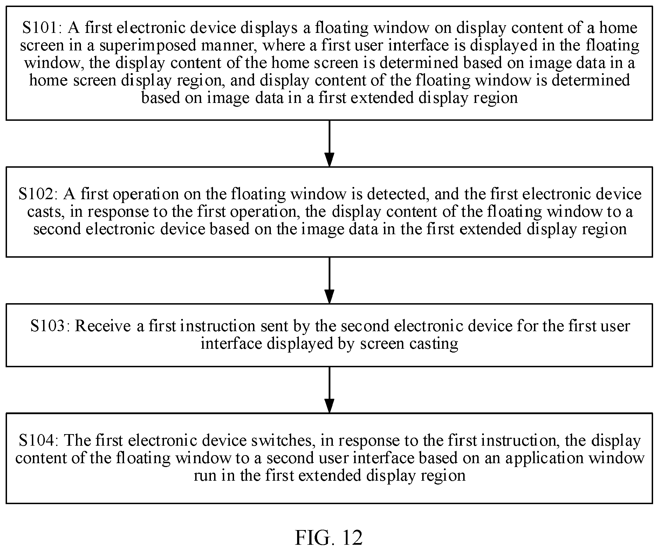

FIG. 12 shows an example of a screen casting method according to an embodiment of this application. The screen casting method includes, but is not limited to, steps S101 to S104.

S101: A first electronic device displays a floating window on display content of a home screen in a superimposed manner, where a first user interface is displayed in the floating window, the display content of the home screen is determined based on image data in a home screen display region, and display content of the floating window is determined based on image data in a first extended display region.

In embodiments of this application, the first electronic device may be the electronic device 100 in the foregoing embodiment, and the second electronic device may be the electronic device 200 or the electronic device 300 in the foregoing embodiment.

For example, refer to the related embodiment of the scenario 1. The display content of the home screen may be the main interface 11 of the desktop application shown in FIG. 3C, the floating window may be the floating window 1, and the first user interface displayed in the floating window may be the user interface 12 of the music application shown in FIG. 3C. The home screen display region may be Default Display0. The home screen display region is for running an application (for example, the desktop application) other than an application run in the extended display region. The home screen displays the main interface 11 of the desktop application based on image data of the application run in the home screen display region. The first extended display region may be Extend Display1, the first extended display region is for running a music application, and the floating window 1 displays the user interface 12 based on the image data corresponding to the music application run in the first extended display region.

For example, refer to the related embodiment of the scenario 2. Display content of the home screen may be the video conference interface 18 of the conference application shown in FIG. 7B (the video conference interface 18 shown in FIG. 7B does not include the foregoing video call content 19). The floating window may be the floating window 2, and the first user interface displayed in the floating window may be the video call content 19 of the conference application shown in FIG. 7B. The home screen display region may be Default Display0, and the home screen display region is for running an application window of an application other than the application window run in the extended display region (for example, an application window other than the video call content 19 in the conference application, and an application window of an application other than the conference application). The home screen displays the video conference interface 18 of the conference application based on image data of the application run in the home screen display region. The first extended display region may be the extended display region 1 (Extend Display1). The first extended display region is for running an application window 1 corresponding to video call content 19 in the conference application. The floating window 1 displays the video call content 19 based on image data corresponding to the application window 1 run in the first extended display region.

S102: A first operation on the floating window is detected, and the first electronic device casts, in response to the first operation, the display content of the floating window to a second electronic device based on the image data in the first extended display region.

For example, refer to the related embodiment of the scenario 1. The floating window (that is, the floating window 1) is configured to display the music application based on the extended display region 1. The first user operation may be the foregoing screen casting operation. For example, refer to FIG. 3H and FIG. 3I. The first user operation may be an input operation (for example, a touch operation) acting on the control 209 after the user selects the content option 208B corresponding to the floating window 1 and the electronic device 200.

In embodiments of this application, if the user chooses to cast the display content of the floating window 1 to the electronic device 200, the electronic device 100 casts the image data of the music application run in the extended display region 1 corresponding to the floating window 1 to the electronic device 200. If the user chooses to cast the display content of the home screen to the electronic device 200, the electronic device 200 casts image data of the applications run in the home screen display region to the electronic device 200.

For example, refer to the related embodiment of the scenario 2. The floating window (that is, the floating window 2) is configured to display the video call content 19 in the conference application based on the extended display region 1. The first user operation may be the foregoing screen casting operation. For example, refer to FIG. 7C. The first user operation may be an input operation acting on the control 209 after the user selects the content option 208C corresponding to the floating window 2 and selects the electronic device 200 as the screen casting destination end.

In embodiments of this application, if the user chooses to cast the display content of the floating window 2 to the electronic device 200, the electronic device 100 casts the image data of the video call content 19 run in the extended display region 1 corresponding to the floating window 2 to the electronic device 200. If the user chooses to cast the display content of the home screen to the electronic device 200, the electronic device 200 casts the image data in the application window of the application run in the home screen display region to the electronic device 200.

S103: Receive a first instruction sent by the second electronic device for the first user interface displayed by screen casting.

S104: The first electronic device switches, in response to the first instruction, the display content of the floating window to a second user interface based on an application window run in the first extended display region.

For example, as shown in FIG. 4D, the second electronic device is the electronic device 200, and the user interface 12 displayed on the electronic device 200 by screen casting includes the control 302. The control 302 may receive an input operation (for example, a touch operation) performed by the user. In response to the foregoing input operation, the electronic device 200 may send a first instruction to the electronic device 100. The first instruction includes touch information of the foregoing input operation. Based on the touch information of the foregoing input operation carried in the first instruction, in response to the foregoing input operation, the electronic device 100 switches display content of the floating window 1 to the second user interface, that is, the playlist interface 16 of the music application shown in FIG. 4E, and sends image data corresponding to the playlist interface 16 to the electronic device 200. The electronic device 200 displays the playlist interface 16 shown in FIG. 4F.

For example, as shown in FIG. 7F, the second electronic device is the electronic device 200, and video call content 19 displayed on the electronic device 200 by screen casting includes the display region 403B. The display region 403B may receive an input operation (for example, a touch operation) performed by the user. In response to the foregoing input operation, the electronic device 200 may send a first instruction to the electronic device 100. The first instruction includes touch information of the foregoing input operation. Based on the touch information of the foregoing input operation carried in the first instruction, in response to the foregoing input operation, the electronic device 100 switches video sources in the display region 403A and the display region B in the video call content 19, that is, switches display content of the floating window 1 to the second user interface (that is, the video call content 19 shown in FIG. 7G), and send image data of the switched video call content 19 to the electronic device 200. The electronic device 200 displays the video call content 19 shown in FIG. 7H.

It should be noted that, specific display content in the floating window shown in FIG. 7B is different from specific display content in the floating window shown in FIG. 7F, but both correspond to a same application window, that is, an application window corresponding to the video call content 19.

In an implementation, the first instruction includes first coordinates of a second operation acting on the first user interface in a screen casting window displayed on the second electronic device. That the first electronic device switches the display content of the floating window to a second user interface based on an application window run in the first extended display region specifically includes: The first electronic device determines, based on the first coordinates and an interface layout of an application window recently run in the first extended display region, that the second operation is for switching display content of screen casting to the second user interface. The electronic device switches the display content of the floating window to the second user interface, and sends image data in the second user interface to the second electronic device.

For example, refer to the related embodiment of the scenario 1. The second operation may be an input operation acting on the control 302 shown in FIG. 4D, and the application window recently run in the first extended display region is an application window corresponding to the user interface 12 of the music application.

For example, refer to the related embodiment of the scenario 2. The second operation may be an input operation acting the display region 403B shown in FIG. 7F, and the application window recently run in the first extended display region is an application window corresponding to the video call content 19.

In an implementation, the first coordinates are first original touch coordinates of the second operation on a display screen of the second electronic device. That the first electronic device determines, based on the first coordinates and an interface layout of an application window recently run in the first extended display region, that the second operation is for switching display content of screen casting to the second user interface specifically includes: obtaining first relative coordinates of the first original touch coordinates based on a position of the screen casting window on the display screen of the second electronic device, where the first relative coordinates are relative coordinates that are of the first original touch coordinates and that are in the screen casting window; determining, based on the first relative coordinates and a window ratio of the screen casting window to a full-screen display window of the first electronic device, second relative coordinates corresponding to the first relative coordinates, where the second relative coordinates are relative coordinates that are of the first relative coordinates in the screen casting window and that are in the full-screen display window of the first electronic device; and determining, based on the second relative coordinates and the interface layout of the application window recently run in the first extended display region, that the second operation is for switching the display content of the floating window to the second user interface.

Refer to the related embodiment of FIG. 11E. The second operation may be the touch operation 4 described in FIG. 11E, the first coordinates are original touch coordinates of the touch operation 4 detected by the electronic device 200, the first relative coordinates may be the foregoing relative coordinates 4, and the second relative coordinates may be the foregoing relative coordinates 5.

In an implementation, the first coordinates are first relative coordinates of first original touch coordinates of the second operation on a display screen of the second electronic device, and the first relative coordinates are relative coordinates that are of the first original touch coordinates and that are in the screen casting window. That the first electronic device determines, based on the first coordinates and an interface layout of an application window recently run in the first extended display region, that the second operation is for switching display content of screen casting to the second user interface specifically includes: determining, based on the first relative coordinates and a window ratio of the screen casting window to a full-screen display window of the first electronic device, second relative coordinates corresponding to the first relative coordinates, where the second relative coordinates are relative coordinates that are of the first relative coordinates in the screen casting window and that are in the full-screen display window of the first electronic device; and determining, based on the second relative coordinates and the interface layout of the application window recently run in the first extended display region, that the second operation is for switching the display content of the floating window to the second user interface.

It may be understood that, in an implementation, after detecting the touch operation 4, the second electronic device may calculate relative coordinates 4 of the original touch coordinates of the touch operation 4, and include the relative coordinates 4 in the first instruction sent to the first electronic device. Then, the first electronic device determines, based on the relative coordinates 4 and an interface layout of an application window recently run in the first extended display region, that the second operation is for switching the display content of the floating window to the second user interface.

In an implementation, the first coordinates are second relative coordinates corresponding to first original touch coordinates of the second operation on a display screen of the second electronic device, and the second relative coordinates are determined based on first relative coordinates of the first original touch coordinates and a window ratio of the screen casting window to a full-screen display window of the first electronic device. The first relative coordinates are relative coordinates that are of the first original touch coordinates and that are in the screen casting window, and the second relative coordinates are relative coordinates that are of the first relative coordinates in the screen casting window and that are in the full-screen display window of the first electronic device.

It may be understood that, in an implementation, after detecting the touch operation 4, the second electronic device may calculate relative coordinates 4 of the original touch coordinates of the touch operation 4 and calculate relative coordinates 5 corresponding to the relative coordinates 4, and then, include the relative coordinates 5 in the first instruction sent to the first electronic device. The first electronic device determines, based on the relative coordinates 5 and the interface layout of the application window recently run in the first extended display region, that the second operation is for switching the display content of the floating window to the second user interface.

In an implementation, before that a first electronic device displays a floating window on display content of a home screen in a superimposed manner, the method further includes: The first electronic device displays a first user interface of a first application window of a first application. A third operation on a target floating object is detected. The target floating object is the first application or the first application window. The first electronic device creates, in response to the third operation, the first extended display region, and migrates, to the first extended display region, the target floating object run in the home screen. That a first electronic device displays a floating window on display content of a home screen in a superimposed manner, the method specifically includes: The first electronic device determines the display content of the floating window based on image data of the target floating object run in the first extended display region, determines the display content of the home screen based on the image data in the home screen display region, and displays the floating window on the display content of the home screen in a superimposed manner.

In an implementation, the target floating object is the first application, the first extended display region is for running the first application, and the floating window is configured to display a user interface of the first application based on the image data in the first extended display region. Alternatively, the target floating object is the first application window, the first extended display region is for running the first application window, and the floating window is configured to display a user interface of the first application window based on the image data in the first extended display region.

For example, refer to the related embodiment of the scenario 1. The target floating object is a first application, the first application may be the foregoing music application, and the foregoing first user interface may be the user interface 12 shown in FIG. 3B. The third operation may be the foregoing application floating operation. For example, two fingers of the user slide on the display screen shown in FIG. 3B, and the two fingers gradually approach each other in the sliding process. In response to the foregoing application floating operation, the electronic device 100 creates an extended display region 1 corresponding to the music application, and migrates the music application in the home screen display region to the extended display region 1. The floating window is configured to display a user interface of the music application based on image data of the music application run in the extended display region 1. For example, the floating window 1 shown in FIG. 3C displays the user interface 12 based on the extended display region 1.

For example, refer to the related embodiment of the scenario 1. The target floating object is a first application window, the first application window may be an application window corresponding to the video call content 19, and a user interface of the first application window may be the video call content 19 shown in FIG. 7A. The third operation may be the foregoing interface floating operation, for example, a touch operation acting on the control 404 in the video call content 19 shown in FIG. 7A. In response to the foregoing interface floating operation, the electronic device 100 creates an extended display region 1 corresponding to the video call content 19, and migrates the video call content 19 in the home screen display region to the extended display region. The floating window is configured to display the video call content 19 based on image data of the video call content 19 run in the extended display region 1. For example, the floating window 2 shown in FIG. 7B displays the video call content 19 based on the extended display region 1.

In an implementation, after the first electronic device casts, in response to the first operation, the display content of the floating window to a second electronic device based on the image data in the first extended display region, the method further includes: A fourth operation acting on the first user interface displayed in the floating window is detected. The first electronic device switches, in response to the fourth operation, the display content of the floating window to a third user interface based on the first extended display region.

In embodiments of this application, after the display content of the floating window is casted to the second electronic device, forward control may be performed on the screen casting content through the floating window displayed on the first electronic device.

For example, refer to the related embodiment of forward control in scenario 1. The user interface 12 shown in FIG. 4A is displayed in the floating window 1, and the user interface 12 includes the control 301. The fourth operation may be a touch operation acting on the control 301 shown in FIG. 4A. In response to the touch operation, the electronic device 100 displays, based on the music application run in the extended display region 1, the song playing interface 15 of the music application shown in FIG. 4B.

For example, refer to the related embodiment of forward control in scenario 2. The video call content 19 shown in FIG. 7I is displayed in the floating window 2, and the video call content 19 includes the display region 403A and the display region 403C. The fourth operation may be a touch operation acting the display region 403C shown in FIG. 7I. In response to the touch operation, the electronic device 100 displays, based on the video call content 19 run in the extended display region 1, the video call content 19 shown in FIG. 7J.

In an implementation, that the first electronic device switches, in response to the fourth operation, the display content of the floating window to a third user interface based on the first extended display region specifically includes: obtaining third relative coordinates of second original touch coordinates of the fourth operation, where the third relative coordinates are relative coordinates of the second original touch coordinates in the floating window; determining, based on the third relative coordinates and a window ratio of the floating window to a full-screen display window of the first electronic device, fourth relative coordinates corresponding to the third relative coordinates, where the fourth relative coordinates are relative coordinates of the third relative coordinates in the full-screen display window of the first electronic device; and determining, based on the fourth relative coordinates and an interface layout of an application window recently run in the first extended display region, that the fourth operation is for switching the display content of the floating window to the third user interface.

Refer to the related embodiment of FIG. 11C. The fourth operation may be the touch operation 3 described in FIG. 11C, the second original coordinates may be original touch coordinates of the touch operation 3, the third relative coordinates may be the foregoing relative coordinates 2, and the fourth relative coordinates may be the foregoing relative coordinates 1.

In an implementation, the display content of the home screen is a fourth user interface, and after a first electronic device displays a floating window on display content of a home screen in a superimposed manner, the method further includes: A fifth operation on the home screen is detected. The first electronic device casts, in response to the fifth operation, the display content of the home screen to the second electronic device based on the image data in the home screen display region. A second instruction sent by the second electronic device for the fourth user interface displayed by screen casting is received. The first electronic device switches, in response to the second instruction, the display content of the home screen to a fifth user interface based on the application window recently run in the home screen display region.

In embodiments of this application, the display content of the home screen may be further casted to the screen casting destination end, and reverse control may be performed on the display content of the home screen of the first electronic device through the screen casting destination end.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium, or may be transmitted by using the computer-readable storage medium. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A sequence of the steps of the method in embodiments of this application may be adjusted, and specific steps may also be combined or removed according to an actual requirement.

The modules in the apparatus in embodiments of this application may be combined, divided, and deleted according to an actual requirement.

The foregoing embodiments are merely intended for describing the technical solutions of the present disclosure, but not for limiting this application. Although this application is described in detail with reference to the foregoing embodiments, it should be appreciated by a person skilled in the art that, the technical solutions described in the foregoing embodiments may still be modified, or some technical features thereof may be equivalently replaced, as long as such modifications or replacements do not cause the essence of corresponding technical solutions to depart from the scope of the technical solutions of embodiments of this application.

## Claims

1. A screen casting method, comprising:
displaying, by a first electronic device, a floating window on display content of a home screen in a superimposed manner, wherein a first user interface is displayed in the floating window, the display content of the home screen is determined based on image data in a home screen display region, and display content of the floating window is determined based on image data in a first extended display region;
detecting a first operation on the floating window, and casting, by the first electronic device in response to the first operation, the display content of the floating window to a second electronic device based on the image data in the first extended display region;
receiving a first instruction sent by the second electronic device for the first user interface displayed by screen casting; and
switching, by the first electronic device in response to the first instruction, the display content of the floating window to a second user interface based on an application window run in the first extended display region.

2. The method according to claim 1, wherein the first instruction comprises first coordinates of a second operation acting on the first user interface in a screen casting window displayed on the second electronic device; and the switching, by the first electronic device, the display content of the floating window to a second user interface based on an application window run in the first extended display region specifically comprises:
determining, by the first electronic device based on the first coordinates and an interface layout of an application window recently run in the first extended display region, that the second operation is for switching display content of screen casting to the second user interface; and
switching, by the electronic device, the display content of the floating window to the second user interface, and sending image data in the second user interface to the second electronic device.

3. The method according to claim 2, wherein the first coordinates are first original touch coordinates of the second operation on a display screen of the second electronic device; and the determining, by the first electronic device based on the first coordinates and an interface layout of an application window recently run in the first extended display region, that the second operation is for switching display content of screen casting to the second user interface specifically comprises:
obtaining first relative coordinates of the first original touch coordinates based on a position of the screen casting window on the display screen of the second electronic device, wherein the first relative coordinates are relative coordinates that are of the first original touch coordinates and that are in the screen casting window;
determining, based on the first relative coordinates and a window ratio of the screen casting window to a full-screen display window of the first electronic device, second relative coordinates corresponding to the first relative coordinates, wherein the second relative coordinates are relative coordinates that are of the first relative coordinates in the screen casting window and that are in the full-screen display window of the first electronic device; and
determining, based on the second relative coordinates and the interface layout of the application window recently run in the first extended display region, that the second operation is for switching the display content of the floating window to the second user interface.

4. The method according to claim 2, wherein the first coordinates are first relative coordinates of first original touch coordinates of the second operation on a display screen of the second electronic device, and the first relative coordinates are relative coordinates that are of the first original touch coordinates and that are in the screen casting window; and the determining, by the first electronic device based on the first coordinates and an interface layout of an application window recently run in the first extended display region, that the second operation is for switching display content of screen casting to the second user interface specifically comprises:
determining, based on the first relative coordinates and a window ratio of the screen casting window to a full-screen display window of the first electronic device, second relative coordinates corresponding to the first relative coordinates, wherein the second relative coordinates are relative coordinates that are of the first relative coordinates in the screen casting window and that are in the full-screen display window of the first electronic device; and
determining, based on the second relative coordinates and the interface layout of the application window recently run in the first extended display region, that the second operation is for switching the display content of the floating window to the second user interface.

5. The method according to claim 2, wherein the first coordinates are second relative coordinates corresponding to first original touch coordinates of the second operation on a display screen of the second electronic device, and the second relative coordinates are determined based on first relative coordinates of the first original touch coordinates and a window ratio of the screen casting window to a full-screen display window of the first electronic device, wherein the first relative coordinates are relative coordinates that are of the first original touch coordinates and that are in the screen casting window, and the second relative coordinates are relative coordinates that are of the first relative coordinates in the screen casting window and that are in the full-screen display window of the first electronic device.

6. The method according to claim 1, wherein before the displaying, by a first electronic device, a floating window on display content of a home screen in a superimposed manner, the method further comprises:
displaying, by the first electronic device, a first user interface of a first application window of a first application;
detecting a third operation on a target floating object, wherein the target floating object is the first application or the first application window; and
creating, by the first electronic device in response to the third operation, the first extended display region, and migrating, to the first extended display region, the target floating object run in the home screen; and
the displaying, by a first electronic device, a floating window on display content of a home screen in a superimposed manner specifically comprises:
determining, by the first electronic device, the display content of the floating window based on image data of the target floating object run in the first extended display region, determining the display content of the home screen based on the image data in the home screen display region, and displaying the floating window on the display content of the home screen in a superimposed manner.

7. The method according to claim 1, wherein the target floating object is the first application, the first extended display region is for running the first application, and the floating window is configured to display a user interface of the first application based on the image data in the first extended display region; or
the target floating object is the first application window, the first extended display region is for running the first application window, and the floating window is configured to display a user interface of the first application window based on the image data in the first extended display region.

8. The method according to claim 1, wherein after the casting, by the first electronic device in response to the first operation, the display content of the floating window to a second electronic device based on the image data in the first extended display region, the method further comprises:
detecting a fourth operation acting on the first user interface displayed in the floating window; and
switching, by the first electronic device in response to the fourth operation, the display content of the floating window to a third user interface based on the first extended display region.

9. The method according to claim 8, wherein the switching, by the first electronic device in response to the fourth operation, the display content of the floating window to a third user interface based on the first extended display region specifically comprises:
obtaining third relative coordinates of second original touch coordinates of the fourth operation, wherein the third relative coordinates are relative coordinates of the second original touch coordinates in the floating window;
determining, based on the third relative coordinates and a window ratio of the floating window to a full-screen display window of the first electronic device, fourth relative coordinates corresponding to the third relative coordinates, wherein the fourth relative coordinates are relative coordinates of the third relative coordinates in the full-screen display window of the first electronic device; and
determining, based on the fourth relative coordinates and an interface layout of an application window recently run in the first extended display region, that the fourth operation is for switching the display content of the floating window to the third user interface.

10. The method according to claim 1, wherein the display content of the home screen is a fourth user interface, and after the displaying, by a first electronic device, a floating window on display content of a home screen in a superimposed manner, the method further comprises:
detecting a fifth operation on the home screen, and casting, by the first electronic device in response to the fifth operation, the display content of the home screen to the second electronic device based on the image data in the home screen display region;
receiving a second instruction sent by the second electronic device for the fourth user interface displayed by screen casting; and
switching, by the first electronic device in response to the second instruction, the display content of the home screen to a fifth user interface based on the application window recently run in the home screen display region.

11. An electronic device, comprising a touchscreen, a memory, one or more processors, a plurality of applications, and one or more programs, wherein the one or more programs are stored in the memory, wherein when the one or more processors execute the one or more programs, the electronic device is enabled to implement the method according to any one of claims 1 to 10.

12. A computer storage medium, comprising computer instructions, wherein when the computer instructions are run on an electronic device, the electronic device is enabled to perform the method according to any one of claims 1 to 10.

13. A computer program product, wherein when the computer program product is run on a computer, the computer is enabled to perform the method according to any one of claims 1 to 10.
